(19) Europäisches Patentamt
European Patent Office
Office européen des brevets

(11) EP 2 044 148 B1

(12) **FASCICULE DE BREVET EUROPEEN**

(45) Date de publication et mention de la délivrance du brevet:
**05.04.2017 Bulletin 2017/14**

(21) Numéro de dépôt: **07764942.4**

(22) Date de dépôt: **29.06.2007**

(51) Int Cl.:
***C08L 21/00*** (2006.01) ***C08L 33/08*** (2006.01)
***B60C 1/00*** (2006.01)

(86) Numéro de dépôt international:
**PCT/EP2007/005772**

(87) Numéro de publication internationale:
**WO 2008/003435 (10.01.2008 Gazette 2008/02)**

(54) **COMPOSITION ÉLASTOMÈRIQUE RENFORCÉE D'UNE CHARGE DE POLYMÈRE VINYLIQUE NON AROMATIQUE FONCTIONNALISE**

MIT EINEM FUNKTIONALISIERTEN POLYVINYLAROMATISCHEM FÜLLSTOFF VERSTÄRKTE ELASTOMERZUSAMMENSETZUNG

ELASTOMERIC COMPOSITION REINFORCED WITH A FUNCTIONALIZED NON-AROMATIC VINYL POLYMER FILLER

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **06.07.2006 FR 0606169**

(43) Date de publication de la demande:
**08.04.2009 Bulletin 2009/15**

(73) Titulaires:
- **COMPAGNIE GENERALE DES ETABLISSEMENTS MICHELIN**
**63000 Clermont-Ferrand (FR)**
- **Michelin Recherche et Technique S.A.**
**1763 Granges-Paccot (CH)**

(72) Inventeurs:
- **VARAGNIAT, Franck**
**F-63122 Ceyrat (FR)**
- **GANDON-PAIN, Sylvie**
**F-63100 Clermont-Ferrand (FR)**
- **LAPRA, Arnaud**
**F-63450 Saint-Saturnin (FR)**

(74) Mandataire: **Ribière, Joel**
**M.F.P. Michelin,**
**SGD/LG/PI - F35 - Ladoux**
**63040 Clermont-Ferrand Cedex 9 (FR)**

(56) Documents cités:
**EP-A1- 1 298 166** **US-A- 3 520 838**
**US-A1- 2005 228 134**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 044 148 B1

## Description

La présente invention est relative aux compositions d'élastomères diéniques utilisables notamment pour la fabrication de pneumatiques ou de produits semi-finis pour pneumatiques, par exemple de bandes de roulement de ces pneumatiques.

Elle est également relative aux charges renforçantes susceptibles de renforcer de telles compositions de caoutchouc, plus particulièrement aux charges renforçantes de type organique ou polymérique, ainsi qu'à leur utilisation pour renforcer de telles compositions de caoutchouc.

De façon à réduire la consommation de carburant et les nuisances émises par les véhicules à moteur, des efforts importants ont été réalisés par les concepteurs de pneumatiques afin d'obtenir des pneumatiques présentant à la fois une très faible résistance au roulement, une adhérence améliorée tant sur sol sec que sur sol humide ou enneigé, ainsi qu'une bonne résistance à l'usure. Une solution efficace à ce problème a été trouvée, au cours des quinze dernières années, grâce à la mise au point de nouvelles compositions de caoutchouc comportant des charges du type inorganiques, véritablement renforçantes, encore connues sous le nom de "*non-black fillers*", tout particulièrement des silices hautement dispersibles (HDS pour *"Highly Dispersible Silica"*), qui se sont révélées capables de remplacer dans leur fonction de charge renforçante les noirs de carbone conventionnels pour pneumatiques.

Toutefois, ces charges inorganiques renforçantes, en raison d'une densité légèrement supérieure pour un pouvoir renforçant équivalent, présentent l'inconvénient connu d'augmenter le poids des compositions et des articles en caoutchouc en dérivant, comparativement à l'emploi de noir de carbone, ce qui est plutôt antinomique d'un autre objectif plus général qui est celui d'allègement des pneumatiques et donc des véhicules les comportant.

Le document US 2005/0228134 décrit une composition de caoutchouc pour pneumatique comprenant des particules polymériques réticulées dispersées dans une matrice à base au moins d'un élastomère diénique. Les particules sont obtenues par polymérisation en émulsion et sont constituées de monomères fonctionalisés tels que le méthacrylate de méthyle et le diméthacrylate d'éthylène glycol.

Le document EP 1 298 166 divulgue une composition de caoutchouc pour pneumatique comprenant des particules polymériques réticulées dispersées dans une matrice à base au moins d'un élastomère diénique. Les particules sont préparées à partir d'un mélange de monomères comprenant un diène conjugué, du styrène, un monomère comprenant deux fonctions polymérisables et un monomère comprenant une fonction epoxy. La matrice peut être fonctionalisée par des groupements alkoxysilyles par copolymérisation de diène conjugué avec le méthacrylate de triisopropoxysilylpropyle.

Le document US 3 520 838 revendique une méthode pour renforcer les compositions caoutchouteuses à base d'élastomères diéniques. Le système renforçant comprend des particules de polymères réticulées à base du méthacrylate de méthyle et du diméthacrylate d'éthylène glycol. Le document propose également l'utilisation des ces particules polymériques pour la préparation de masterbatch.

Poursuivant leurs recherches, les Demanderesses ont découvert qu'il existe certaines charges organiques de synthèse qui peuvent être utilisées dans ces compositions comme de véritables charges renforçantes, c'est-à-dire capables de remplacer des noirs de carbone conventionnels pour pneumatiques tout comme des silices HDS.

Ces charges organiques de synthèse, grâce à une densité environ deux fois moindre, permettent de réduire de manière très significative le poids des compositions et celui des articles en caoutchouc les contenant, ceci sans compromis sur les propriétés d'usage des pneumatiques.

En conséquence, un premier objet de l'invention concerne une composition de caoutchouc à base d'au moins un élastomère diénique, une charge polymère, un agent de couplage assurant la liaison entre la charge polymère et l'élastomère, caractérisée en ce que ladite charge polymère comporte des nanoparticules de polymère vinylique non aromatique (en abrégé "PVNA") porteur d'une fonction notée "Z" de formule $\equiv$ Si - X, X représentant un groupe hydroxyle ou hydrolysable.

L'invention a également pour objet un masterbatch à base d'au moins un élastomère diénique et une charge polymère comportant des nanoparticules du PVNA fonctionnalisé Z ci-dessus.

L'invention a également pour un objet un procédé d'obtention d'un masterbatch comportant les étapes suivantes :

- partir d'un latex de l'élastomère diénique et d'un latex de la charge polymère ;
- les mélanger intimement ;
- faire précipiter le mélange ainsi obtenu ;
- puis laver et sécher le précipité ainsi obtenu,

ce procédé étant caractérisé en ce que ladite charge polymère comporte des nanoparticules du PVNA fonctionnalisé Z ci-dessus.

L'invention a également pour objet l'utilisation d'un masterbatch selon l'invention pour la fabrication d'une

composition d'élastomère diénique.

L'invention a également pour objet un procédé d'obtention d'une composition de caoutchouc dans lequel on incorpore à au moins un élastomère diénique, au moins une charge polymère et un agent de couplage assurant la liaison entre ladite charge et l'élastomère, et en ce qu'on malaxe thermomécaniquement le tout, en une ou plusieurs étapes, jusqu'à atteindre une température maximale comprise entre 110°C et 190°C, ce procédé étant caractérisé en ce que ladite charge polymère comporte des nanoparticules du PVNA fonctionnalisé Z. De manière toute préférentielle, pour faciliter leur incorporation à la composition de l'invention, les nanoparticules de PVNA sont incorporées à la composition sous la forme du masterbatch de l'invention.

L'invention a également pour objet l'utilisation d'une composition conforme à l'invention pour la fabrication d'articles finis ou produits semi-finis en caoutchouc, ainsi que ces articles finis et produits semi-finis eux-mêmes, comportant une composition de caoutchouc conforme à l'invention, ces articles ou produits étant notamment destinés à tout système de liaison au sol des véhicules automobiles, tels que pneumatiques, appuis internes de sécurité pour pneumatiques, roues, ressorts en caoutchouc, articulations élastomériques, autres éléments de suspension et anti-vibratoire.

L'invention a tout particulièrement pour objet l'utilisation d'une composition de caoutchouc conforme à l'invention pour la fabrication de pneumatiques ou de produits semi-finis pour pneumatiques choisis notamment dans le groupe constitué par les bandes de roulement, les sous-couches destinées par exemple à être placées sous ces bandes de roulement, les nappes d'armature de sommet, les flancs, les nappes d'armature de carcasse, les talons, les protecteurs, les chambres à air, les gommes intérieures étanches pour pneu sans chambre, les gommes internes de renforcement de flancs et autres gommes destinées à supporter la charge en cas de roulage à plat des pneumatiques.

La composition conforme à l'invention est particulièrement adaptée à la fabrication de pneumatiques destinés à équiper des véhicules de tourisme, camionnettes, véhicules 4x4 (à 4 roues motrices), SUV (*"Sport Utility Vehicles*"), deux roues, "Poids-lourds" (c'est-à-dire métro, bus, engins de transport routier (camions, tracteurs, remorques), véhicules hors-la-route), avions, engins de génie civil, agraire, ou de manutention.

L'invention ainsi que ses avantages seront aisément compris à la lumière de la description et des exemples de réalisation qui suivent, ainsi que de la figure qui représente un cliché de microscopie électronique (MET) réalisé sur un échantillon de nanoparticules de PVNA en émulsion aqueuse, conformes à l'invention (Fig.1).

## I. MESURES ET TESTS UTILISES

### I-1. Caractérisation de la charge polyvinylique

La charge de PVNA décrite ci-après consiste en des "nanoparticules", c'est-à-dire des particules dont la dimension principale (diamètre ou longueur) est typiquement inférieure au micromètre, généralement comprise dans un intervalle de l'ordre d'une dizaine de nanomètres à une centaine ou quelques centaines de nanomètres.

Ces nanoparticules de PVNA se présentent sous forme de particules élémentaires (ou "particules primaires"), ces particules élémentaires ou nanoparticules pouvant former des agrégats (ou "particules secondaires") d'au moins deux de ces nanoparticules, lesdits nanoparticules et/ou agrégats pouvant éventuellement former à leur tour des agglomérats susceptibles de se désagglomérer en ces nanoparticules et/ou agrégats sous l'effet d'une force externe, par exemple sous l'action d'un travail mécanique.

Ces nanoparticules sont caractérisées au microscope électronique à transmission (MET), comme indiqué ci-après.

A) Caractérisation en émulsion (latex)

Le latex de charge PVNA, au préalable dilué à l'eau (par exemple à 8 g de charge par litre d'eau) est dilué environ 50 fois dans l'isopropanol. 40 ml de la solution ainsi obtenus sont versés dans un bécher de forme haute (50 ml), puis dispersés à l'aide d'une sonde ultrasons de 600 W (sonde Vibracells, référence 72412, commercialisée par Bioblock Scientific), sous une puissance de 100%, pendant 8 min en mode pulsé (1s ON/1s OFF). Une goutte de la solution ainsi obtenue est alors déposée sur une grille de microscopie en cuivre à membrane de carbone, puis observée sous MET ("CM 200" commercialisé par FEI, tension d'accélération 200 kV) équipé d'une caméra (caméra MegaView II commercialisée par Soft Imaging System) et d'un système d'analyse d'image (AnalySIS Pro A version 3.0 de Soft Imaging System).

Les conditions de réglage du MET sont optimisées de manière connue, en fonction de l'échantillon et de l'état de vieillissement du filament (typiquement, diaphragme condenseur 2 (50 $\mu$m de diamètre) - objectif 3 (40 $\mu$m de diamètre)). Le taux de grandissement du microscope est adapté pour avoir une résolution suffisante sur les nanoparticules. Par exemple, un grandissement de 65000 correspond à une résolution voisine de 0,96 nm/pixel, sur une image numérique de 1248x1024 pixels ; une telle résolution permet par exemple la définition d'une nanoparticule sphérique de 40 nm de diamètre avec plus de 1000 pixels. La calibration de la caméra est réalisée de manière conventionnelle à

l'aide d'étalons (à faible grandissement, un réseau en or de 2160 lignes/mm ; à fort grandissement, des billes d'or de diamètre 0,235 nm).

Le diamètre des nanoparticules est mesuré à l'aide du logiciel AnalySIS Pro A version 3.0 (avec option "Cercle" du menu "Mesure"). Pour chaque image et pour une nanoparticule donnée, l'opérateur matérialise à l'écran (à l'aide de la souris) trois points situés en périphérie de l'image de la nanoparticule. Le logiciel trace alors automatiquement le cercle qui passe par ces trois points et stocke dans un fichier (Excel) les valeurs de l'aire circulaire, du périmètre circulaire et du diamètre circulaire de la nanoparticule. Cette opération n'étant possible que pour les nanoparticules dont les contours sont bien délimités, sont exclues de la mesure les nanoparticules présentes dans des agglomérats. L'expérience est répétée au minimum sur 2000 nanoparticules représentatives de l'échantillon (issues d'au moins 10 images différentes, typiquement 50).

B) Caractérisation en composition de caoutchouc

Les échantillons de charge PVNA en composition de caoutchouc vulcanisée, sont préparés de manière connue par ultracryomicrotomie (voir par exemple L. Sawyer and D. Grubb, *Polymer Microscopy,* p. 92, Chapman and Hall).

L'appareil utilisé ici est un ultracryomicrotome Leica ("EMFCS") équipé d'un couteau diamant. L'échantillon est découpé sous la forme d'une pyramide tronquée à base rectangulaire, la face tronquée à partir de laquelle seront réalisées les coupes mesurant moins de 600 $\mu$m de côté. Cette pyramide tronquée est maintenue fermement pendant la découpe. L'échantillon est refroidi à une température adaptée (proche de la température de transition vitreuse de l'échantillon) pour qu'il soit suffisamment dur pour permettre la coupe, la température du couteau étant typiquement voisine de celle de l'échantillon. La vitesse et l'épaisseur de coupe (telles qu'affichées par l'appareillage) sont préférentiellement comprises entre 1 et 2 mm/s et entre 20 et 30 nm, respectivement. A l'aide d'une goutte de solution aqueuse de saccharose (40 g dans 40 ml d'eau), les coupes sont récupérées dans l'enceinte de l'ultracryomicrotome puis déposées sur une grille de MET, à température ambiante. Le saccharose est ensuite éliminé en déposant la grille à la surface d'un cristallisoir rempli d'eau distillée.

Pour augmenter le contraste, les coupes peuvent subir une étape de coloration avec du tétra-oxyde d'osmium ($OsO_4$), selon un procédé bien connu de l'homme du métier (L. C. Sawyer et David Grubb, Polymer Microscopy, Chapman and Hall, London, New York, 1987, pp. 97-98) : les grilles sont placées au dessus d'un cristallisoir ouvert contenant un mélange de 20 ml d'eau distillée et de 0,1 g de $OsO_4$ (Agar Scientific, référence R1015) ; l'ensemble, placé au sein d'un dessiccateur étanche, est chauffé au bain-marie à 50°C pendant 3h à 3h30.

Les coupes sont observées sur microscope CM 200 (tension 200 kV). Pour optimiser le contraste, les observations sont réalisées en imagerie filtrée en énergie classique (fenêtre en énergie $\Delta$E égale à environ 15 eV), avec un système d'imagerie GIF (Gatan Imaging Filter) et les logiciels associés (Filter Control et Digital Micrograph 3.4).

I-2. Caractérisation des compositions de caoutchouc

Les compositions de caoutchouc sont caractérisées, avant et après cuisson, comme indiqué ci-après.

A) Essais de traction

Ces essais permettent de déterminer les contraintes d'élasticité et les propriétés à la rupture après cuisson. Sauf indication différente, ils sont effectués conformément à la norme française NF T 46-002 de septembre 1988. On mesure en première élongation (i.e., sans cycle d'accommodation) les modules sécants vrais (i.e., calculés en se ramenant à la section réelle de l'éprouvette), exprimés en MPa, à 100% d'allongement (modules notés M100), à 300% d'allongement (M300) et 400% d'allongement (M400). Toutes ces mesures de traction sont effectuées dans les conditions normales de température et d'hygrométrie (23 $\pm$ 2°C ; 50 $\pm$ 5% d'humidité relative).

B) Rhéométrie

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983). On mesure la constante de vitesse de conversion K (en $min^{-1}$) d'ordre 1, calculée entre 30% et 80% de conversion, qui permet d'apprécier la cinétique de vulcanisation (plus K est élevée, plus la cinétique est rapide).

C) Propriétés dynamiques

Les propriétés dynamiques $\Delta G^*$ et $\tan(\delta)_{max}$ sont mesurées sur un viscoanalyseur (Metravib VA4000), selon

la norme ASTM D 5992-96. On enregistre la réponse d'un échantillon de composition vulcanisée (éprouvette cylindrique de 2 mm d'épaisseur et de 79 $mm^2$ de section), soumis à une sollicitation sinusoïdale en cisaillement simple alterné, à la fréquence de 10Hz, dans les conditions normales de température (23°C) selon la norme ASTM D 1349-99. On effectue un balayage en amplitude de déformation crête-crête de 0,1 à 50% (cycle aller), puis de 50% à 0,1% (cycle retour). Les résultats exploités sont le module complexe de cisaillement dynamique (G*) et le facteur de perte tan $\delta$. Pour le cycle retour, on indique la valeur maximale de tan $\delta$ observée ($\tan(\delta)_{max}$), ainsi que l'écart de module complexe ($\Delta G^*$) entre les valeurs à 0,1 et 50% de déformation (effet Payne).

## II. DESCRIPTION DETAILLEE DE L'INVENTION

Les compositions de caoutchouc selon l'invention sont à base d'au moins les constituants suivants : un (c'est-à-dire au moins un) élastomère diénique, une (au moins une) charge polymère à titre de charge renforçante et un (au moins un) agent de couplage assurant la liaison entre cette charge polymère et cet élastomère diénique, ladite charge polymère comportant des nanoparticules de PVNA telles que décrites en détail ci-après.

Bien entendu, par l'expression "à base de", il faut entendre une composition comportant le mélange et/ou le produit de réaction des différents constituants de base utilisés, certains de ces constituants pouvant réagir et/ou étant destinés à réagir entre eux, au moins partiellement, lors des différentes phases de fabrication de la composition, ou lors de sa cuisson ultérieure. Cette définition s'applique également au masterbatch de l'invention.

Dans la présente description, sauf indication expresse différente, tous les pourcentages (%) indiqués sont des % en masse.

### II-1. Elastomère diénique

Par élastomère ou caoutchouc (les deux termes étant synonymes) du type "diénique", on entend de manière générale un élastomère issu au moins en partie (i.e. un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend par "essentiellement insaturé" un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions conformes à l'invention :

(a) tout homopolymère obtenu par polymérisation d'un monomère diène conjugué ayant de 4 à 12 atomes de carbone ;

(b) tout copolymère obtenu par copolymérisation d'un ou plusieurs diènes conjugués entre eux ou avec un ou plusieurs composés vinyle aromatique ayant de 8 à 20 atomes de carbone ;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène ;

(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion (notamment émulsion) ou en solution ; ils peuvent être couplés et/ou étoilés ou encore fonctionnalisés avec un agent de couplage et/ou d'étoilage ou de fonctionnalisation.

Conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65%, une teneur en liaisons trans-1,4 comprise entre 20% et 80%, les copolymères de butadiène-isoprène et notamment ceux ayant une teneur en isoprène comprise entre 5% et 90% en poids et une température de transition vitreuse (Tg, mesurée selon ASTM D3418) de -40°C à -80°C, les copolymères isoprène-styrène et notamment ceux ayant une teneur en styrène comprise entre 5% et 50% en poids et une Tg comprise entre -25°C et -50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition conforme à l'invention est choisi préférentiellement dans le groupe des élastomères diéniques fortement insaturés constitué par les polybutadiènes (en abrégé "BR"), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-acrylonitrile (ABR), les copolymères de butadiène-styrène (SBR), les copolymères d'isoprène-butadiène (BIR), les copolymères d'isoprène-styrène (SIR) et les copolymères d'isoprène-butadiène-styrène (SBIR).

Selon un mode de réalisation particulier, l'élastomère diénique est majoritairement (c'est-à-dire pour plus de 50 pce) un SBR, qu'il s'agisse d'un SBR préparé en émulsion ("E-SBR") ou d'un SBR préparé en solution ("S-SBR"), ou un coupage (mélange) SBR/BR, SBR/NR (ou SBR/IR), ou encore BR/NR (ou BR/IR).

Selon un autre mode de réalisation particulier, l'élastomère diénique est majoritairement (pour plus de 50 pce) un élastomère isoprénique. C'est le cas en particulier lorsque les compositions de l'invention sont destinées à constituer, dans les pneumatiques, les matrices de caoutchouc de certaines bandes de roulement (par exemple pour véhicules industriels), de nappes d'armature de sommet (par exemple de nappes de travail, nappes de protection ou nappes de frettage), de nappes d'armature de carcasse, de flancs, de bourrelets, de protecteurs, de sous-couches, de blocs de caoutchouc et autres gommes internes assurant l'interface entre les zones précitées des pneumatiques.

Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR).

Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode de réalisation particulier, notamment lorsqu'elle est destinée à un flanc de pneumatique, à une gomme intérieure étanche de pneumatique sans chambre (ou autre élément imperméable à l'air), la composition conforme à l'invention peut contenir au moins un élastomère diénique essentiellement saturé, en particulier au moins un copolymère EPDM ou un caoutchouc butyle (éventuellement chloré ou bromé), que ces copolymères soient utilisés seuls ou en mélange avec des élastomères diéniques fortement insaturés tels que cités précédemment, notamment NR ou IR, BR ou SBR.

Les compositions de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

II-2. Charge polymère PVNA

La charge polymérique renforçante des compositions de l'invention a pour caractéristique essentielle de comporter des nanoparticules d'un polymère vinylique non aromatique (PVNA) fonctionnalisé, porteur d'une (au moins une) fonction notée "Z" de formule (I) :

$$\equiv\text{Si-X},$$

dans laquelle Si représente un atome de silicium et X représente un groupe hydroxyle ou un groupe monovalent hydrolysable.

L'homme de métier comprendra aisément à la lecture de cette formule (I) qu'il existe au moins un et au plus trois groupe(s) X, hydroxyle ou groupe(s) monovalent(s) hydrolysable(s), relié(s) au PVNA via l'atome de silicium tétravalent.

Dans la présente demande, on entend par définition :

- par "monomère vinylique", tout monomère porteur d'au moins un groupement vinyle ($CH_2$ = CH -) ou (forme substituée) groupement vinylidène ($CH_2$ = C<) ;
- par "monomère vinylique non aromatique", tout monomère vinylique autre qu'un monomère de type vinylaromatique c'est-à-dire substitué en alpha par un groupe aromatique ;
- par "polymère vinylique non aromatique" ("PVNA"), tout homopolymère de monomère vinylique non aromatique ou tout copolymère dont au moins la fraction pondérale majoritaire (de préférence au moins égale ou supérieure à 50%, plus préférentiellement égale ou supérieure à 70%) comporte des motifs vinyliques non aromatiques, la fraction minoritaire (de préférence inférieure à 50%, plus préférentiellement inférieure à 30%) pouvant être issue(s) de monomère(s) d'une autre nature, y compris des monomères vinylaromatiques.

De préférence, dans la formule (I) ci-dessus, X est un halogène, notamment le chlore, ou X répond à la formule OR dans laquelle O est l'oxygène et R représente l'hydrogène ou un groupe hydrocarboné monovalent, linéaire ou ramifié, comportant de préférence de 1 à 15 atomes de carbone.

Conviennent plus particulièrement des fonctions Z choisies parmi les fonctions dites "hydroxysilyle" (≡Si-OH) ou "alkoxysilyle" (≡Si-OR'), R' étant un radical hydrocarboné comportant de préférence de 1 à 15 atomes de carbone, plus préférentiellement choisi parmi les alkyles, alkoxyalkyles, cycloalkyles et aryles, en particulier parmi les alkyles en $C_1$-$C_8$, les alkoxyalkyles en $C_2$-$C_8$, les cycloalkyles en $C_5$-$C_{10}$ et les aryles en $C_6$-$C_{12}$.

Selon un mode de réalisation particulier préféré de l'invention, Z répond à l'une des formules ci-après :

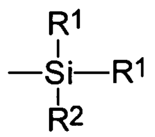 ; 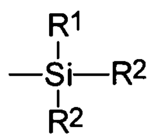 ; 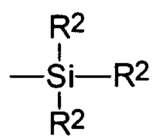 ,

dans lesquelles :

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$ ;
- les radicaux $R^2$, substitués ou non substitués, identiques ou différents entre eux, sont choisis dans le groupe constitué par l'hydroxyle, les alkoxyles en $C_1$-$C_8$ et les cycloalkoxyles en $C_5$-$C_8$.

Plus préférentiellement, dans ces relations :

- les radicaux $R^1$ sont choisis dans le groupe constitué par les alkyles en $C_1$-$C_4$, cyclohexyle et phényle, notamment parmi les alkyles en $C_1$-$C_4$, plus particulièrement parmi méthyle et éthyle ;
- les radicaux $R^2$ sont choisis dans le groupe constitué par l'hydroxyle et les alkoxyles en $C_1$-$C_6$, notamment parmi l'hydroxyle et les alkoxyles en $C_1$-$C_4$, plus particulièrement parmi hydroxyle, méthoxyle et éthoxyle.

Plus préférentiellement encore, les radicaux $R^1$ sont choisis parmi méthyle et éthyle et les radicaux $R^2$ sont choisis parmi hydroxyle, méthoxyle et éthoxyle.

La fonctionnalisation Z précédemment décrite du PVNA pourrait être effectuée sur le polymère final, par exemple par réaction sur ses doubles liaisons résiduelles. On préfère l'apporter à l'aide d'un comonomère fonctionnalisé Z (ci-après noté comonomère B).

En d'autres termes, selon un mode de réalisation particulier de l'invention, ledit PVNA est un copolymère d'au moins les deux monomères suivants :

- un premier monomère (noté "A") vinylique non aromatique ;
- un second monomère (noté "B") porteur de la fonction Z de formule (I) précédemment définie.

Le monomère A vinylique non aromatique ci-dessus répond de préférence à la formule (II) :

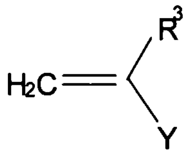

dans laquelle :

o le radical $R^3$ est choisi dans le groupe constitué par l'hydrogène, les alkyles en $C_1$-$C_8$ et les cycloalkyles en $C_5$-$C_8$ ;
o le radical Y est choisi dans le groupe constitué par les halogènes, les radicaux OH, OR', SR', C≡N, C(O)OH, C(O)OR', C(O)N(R'R"), C(O)R' et OC(O)R' dans lesquels R' et R", identiques ou différents, sont choisis dans le groupe constitué par les alkyles, linéaires, ramifiés ou cycliques, comportant de 1 à 12 atomes de carbone, et les aryles, aralkyles ou alkaryles comportant de 6 à 20 atomes de carbone, R' et R" pouvant comporter au moins un hétéroatome choisi parmi les halogènes (de préférence le chlore), l'oxygène, l'azote et le soufre.

A titre d'exemples de tels monomères A peuvent être cités les monomères suivants :

- alcool vinylique (pour le radical hydroxyle Y = OH) ;
- méthyl vinyl éther, éthyl vinyl éther, phényl vinyl éther (pour le radical organoxyle Y = OR') ;
- méthyl vinyl thioéther, éthyl vinyl thioéther, phényl vinyl thioéther (pour le radical sulfényle Y = SR') ;
- acrylonitrile et méthacrylonitrile (pour le radical cyano Y = C=N) ;
- acide acrylique et acide méthacrylique (pour le radical carboxyle Y = C(O)OH) ;
- (méth)acrylates de méthyle, de n-butyle, de tert-butyle, d'hydroxyéthyle, de glycidyle (pour le radical oxycarbonyle Y = C(O)OR') ;
- N,N-diméthyl-(méth)acrylamide, N,N-diisopropyl-(méth)acrylamide, N-méthyl,N-isopropylacrylamide (pour le radical carbamoyle Y = C(O)N(R'R") ;
- vinyl méthyl cétone (pour le radical acyle Y = C(O)R') ;
- acétate de vinyle, propanoate de vinyle (pour le radical acyloxy Y = OC(O)R').

De préférence, dans la formule (II) ci-dessus, les caractéristiques suivantes sont vérifiées :

- $R^3$ est choisi dans le groupe constitué par l'hydrogène et les alkyles en $C_1$-$C_6$ ;
- Y est choisi dans le groupe constitué par le chlore, les radicaux C(O)OH, C(O)OR', C(O)N(R'R") et OC(O)R'.

Plus préférentiellement encore, les caractéristiques suivantes son vérifiées :

- Y est le groupe C(O)OR';
- $R^3$ est l'hydrogène ou le méthyle.

A titre d'exemples de monomères A vérifiant les caractéristiques plus préférentielles ci-dessus, on citera particulièrement les monomères acrylates ou méthacrylates de formule (II) dans lesquels Y est C(O)OR' et R' est choisi dans le groupe constitué par les alkyles ayant de 1 à 8 atomes de carbone.

A titre d'exemples de monomères A vérifiant les caractéristiques préférentielles ci-dessus, on citera particulièrement les monomères acrylates ($R^3$ = hydrogène) ou méthacrylates ($R^3$ = méthyle) dans lesquels R' est un alkyle comportant de 1 à 4 atomes de carbone, notamment ceux choisis dans le groupe constitué par l'acrylate de méthyle (R' est le méthyle), le méthacrylate de méthyle (R' est le méthyle), l'acrylate d'éthyle (R' est l'éthyle), le méthacrylate d'éthyle (R' est l'éthyle), l'acrylate de n-butyle (R' est le n-butyle), le méthacrylate de n-butyle (R' est le n-butyle), l'acrylate de tert-butyle (R' est le tert-butyle), le méthacrylate de tert-butyle (R' est le tert-butyle), l'acrylate d'hydroxyéthyle (R' est l'hydroxyéthyle), le méthacrylate d'hydroxyéthyle (R' est l'hydroxyéthyle), et les mélanges de ces composés.

Pour la clarté de l'exposé sont rappelées ci-dessous les formules développées de certains de ces monomères A préférentiels de type monofonctionnels :

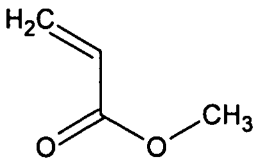

acrylate de méthyle

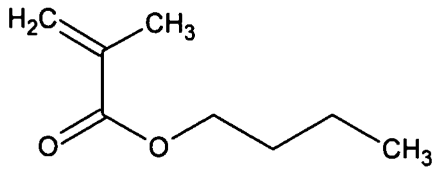

méthacrylate de n-butyle

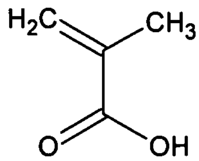

acide méthacrylique

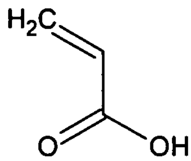

acide acrylique

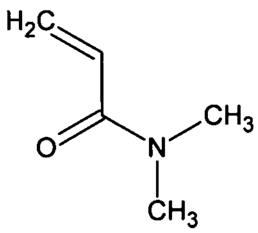

N,N-diméthylacrylamide

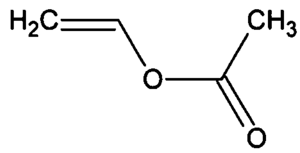

acétate de vinyle

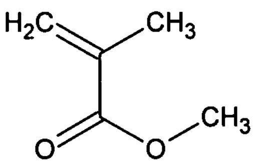

méthacrylate de méthyle

On utilise de préférence l'acrylate de méthyle ou le méthacrylate de méthyle, plus préférentiellement encore le méthacrylate de méthyle (en abrégé "MMA").

A titre d'exemples de monomères A du type bifonctionnels pourraient être utilisés des monomères de formule (II) ci-dessus dans lesquelles le radical Y est porteur d'un second groupe vinyle ou vinylidène copolymérisable par voie radicalaire.

Selon un premier mode de réalisation préférentiel, le monomère B est choisi dans le groupe constitué par les acrylates d'hydroxysilyl-alkyl($C_1$-$C_4$), les méthacrylates d'hydroxysilyl-alkyl($C_1$-$C_4$), les acrylates d'alkoxy($C_1$-$C_4$)silyl-alkyl($C_1$-$C_4$), les méthacrylates d'alkoxy($C_1$-$C_4$)silyl-alkyl($C_1$-$C_4$) et les mélanges de ces composés. Plus préférentiellement, le monomère B est choisi dans le groupe constitué par les acrylates d'hydroxy-silyl-alkyl($C_1$-$C_4$), les méthacrylates d'hydroxy-silyl-alkyl($C_1$-$C_4$), les acrylates de méthoxy-silyl-alkyl($C_1$-$C_4$), les méthacrylates de méthoxy-silyl-alkyl($C_1$-$C_4$), les acrylates d'éthoxy-silyl-alkyl($C_1$-$C_4$), les méthacrylates d'éthoxy-silyl-alkyl($C_1$-$C_4$) et les mélanges de ces composés.

Plus particulièrement, le monomère B est choisi dans le groupe constitué par les acrylates d'hydroxysilylpropyle, les méthacrylates d'hydroxysilylpropyle, les acrylates de méthoxysilylpropyle, les méthacrylates de méthoxysilylpropyle, les acrylates d'éthoxysilylpropyle, les méthacrylates d'éthoxysilylpropyle et les mélanges de ces composés. Encore plus particulièrement, le comonomère B est l'acrylate de triméthoxysilylpropyle ou le méthacrylate de triméthoxysilylpropyle.

Selon un autre mode de réalisation préférentiel, le comonomère B est choisi dans le groupe constitué par les styryl-alkyl($C_1$-$C_4$)-hydroxysilanes, les styryl-alkyl($C_1$-$C_4$)-alkoxy($C_1$-$C_4$)silanes et les mélanges de ces composés. Plus préférentiellement, ce comonomère B est choisi dans le groupe constitué par les styryl-alkyl($C_1$-$C_4$)-hydroxysilanes, styryl-alkyl($C_1$-$C_4$)-méthoxysilanes, styryl-alkyl($C_1$-$C_4$)-éthoxysilanes et les mélanges de ces composés.

Plus particulièrement, le comonomère B est choisi dans le groupe constitué par les styryléthylhydroxysilanes, les styryléthylméthoxysilanes, les styryléthyléthoxysilanes et les mélanges de ces composés. Encore plus particulièrement, le comonomère B est le styryléthyltriméthoxysilane.

De préférence, le taux molaire de comonomère B dans le polymère vinylique non aromatique est supérieur à 5%, plus préférentiellement compris entre 5 et 30%, en particulier entre 5 et 20%.

D'autre part, dans la composition de l'invention, le taux pondéral de monomère B est de préférence compris entre 10 et 30%, plus préférentiellement entre 20 et 30%.

Selon un autre mode de réalisation particulièrement préférentiel de l'invention, le PVNA fonctionnalisé se présente en outre dans un état réticulé, c'est-à-dire sous une forme tridimensionnelle, de manière à bien maintenir la morphologie de la charge à haute température.

Une telle réticulation pourrait être apportée par tout moyen connu, par exemple à l'aide d'un post-traitement ou, selon un mode de réalisation plus préférentiel, par au moins l'un des comonomères de départ à la condition bien sûr que ce dernier soit au moins bifonctionnel, c'est-à-dire porteur d'au moins une deuxième fonction susceptible de créer un réseau tridimensionnel de PVNA lors de la polymérisation. Cette réticulation peut être avantageusement apportée par la présence d'un troisième comonomère (ci-après noté comonomère C).

En d'autres termes, dans un tel cas particulier, le PVNA est un copolymère d'au moins les trois monomères suivants, tous trois étant de préférence copolymérisables par polymérisation par voie radicalaire :

- un premier comonomère ("A") vinylique non aromatique ;
- un second comonomère ("B") porteur de la fonction Z de formule (I) ;
- un troisième comonomère ("C") réticulant c'est-à-dire au moins bifonctionnel du point de vue de ladite polymérisation.

Ce monomère C dit réticulant peut être vinylique ou non vinylique, aromatique ou aliphatique.

Conviennent plus préférentiellement comme comonomère C les comonomères porteurs de deux groupes insaturés, notamment éthyléniques, polymérisables par voie radicalaire, en particulier ceux choisis dans le groupe constitué par les di(méth)acrylates ou tri(méth)acrylates de polyols, notamment de diols ou de triols (par exemple d'éthylène glycol, de propylène glycol, 1,4-butanediol, 1,6-hexanediol, triméthylolpropane), les di(méth)acrylamides d'alkylène (par exemple le bis-acrylamide de méthylène), les composés vinylaromatiques, de préférence styréniques, porteurs d'au moins deux groupements vinyliques (par exemple le diisopropenylbenzène (DIB), le divinylbenzène (DVB), le trivinylbenzène (TVB)), et les mélanges de tels comonomères.

On rappelle ci-dessous les formules développées de certains de ces exemples de monomères C préférentiels :

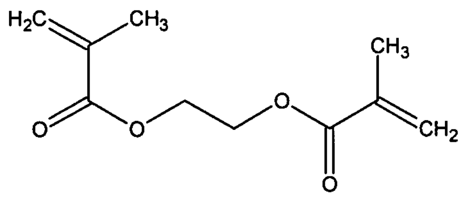

Diméthacrylate d'éthylèneglycol (en abrégé "EGDMA")

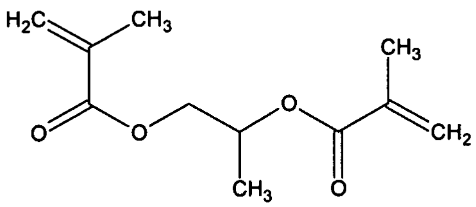

Diméthacrylate de propylène glycol (en abrégé "PGDMA")

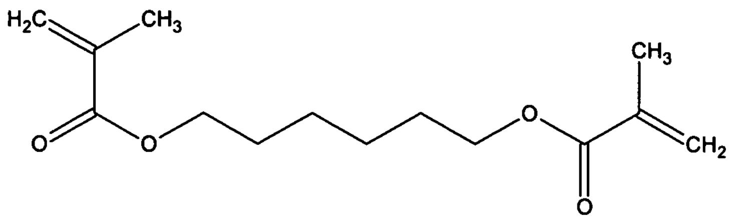

Diméthacrylate d'hexaméthylène glycol (en abrégé "HGDMA")

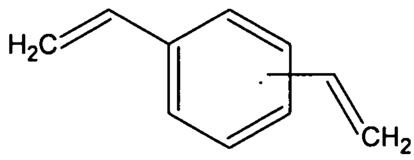

Divinylbenzène (en abrégé "DVB")

Selon un mode de réalisation particulièrement préféré, le PVNA utilisé est un polyacrylate ou polyméthacrylate, ou un copolymère issu de motifs (méth)acrylates selon une fraction pondérale majoritaire (de préférence au moins égale ou supérieure à 50%, plus préférentiellement égale ou supérieure à 70%), par exemple un copolymère choisi dans le groupe constitué par les copolymères MMA-MTSP-EGDMA, MMA-MTSP-PGDMA, MMA-MTSP-HGDMA et MMA-MTSP-DVB.

A titre de comonomère réticulant pourrait être également utilisé le comonomère B porteur de la fonction Z précitée ou le comonomère A, à la condition bien sûr que ce comonomère B ou ce comonomère A soit lui-même au moins bifonctionnel et copolymérisable par voie radicalaire avec les autres comonomères.

Le taux pondéral de comonomère réticulant C est de préference supérieur à 1%, plus préférentiellement supérieur à 5%, en particulier compris entre 10 et 30%.

Divers autres monomères, comme par exemple des monomères diéniques tels que butadiène, isoprène, pipérylène, peuvent être éventuellement ajoutés à titre minoritaire, de préférence pour moins de 20% en poids total de monomères.

Selon un mode de réalisation particulièrement préférentiel de l'invention, les monomères A, B et C sont différents et sont tous trois vinyliques, en particulier sont tous trois vinyliques non aromatiques.

Selon un autre mode de réalisation particulièrement préférentiel de l'invention, combiné ou non au précédent, les monomères A et B sont porteurs d'une seule fonction polymérisable par voie d'addition, et le monomère C réticulant n'est porteur que de deux fonctions polymérisables par voie radicalaire.

Le PVNA fonctionnalisé Z et réticulé peut être préparé par tout procédé de synthèse adapté à la fonctionnalisation d'un copolymère vinylique.

De préférence, cette synthèse est conduite par polymérisation radicalaire des différents monomères. Une telle technique est dans son principe général connue, elle a été notamment appliquée à la polymérisation radicalaire en émulsion de polystyrène fonctionnalisé Z (alkoxysilane ou hydroxysilane) en présence de MTSP (voir par exemple Macromolecules 2001, 34, 5737 et Macromolecules 2002, 35, 6185), ou à la synthèse de polystyrène réticulé (mais non fonctionnalisé) en présence de DVB (Polymer 2000, 41, 481).

De préférence, pour la synthèse décrite ci-dessus, le monomère A vinylique non aromatique est un monomère acrylate ou méthacrylate ; le comonomère B fonctionnalisant (porteur de la fonction Z) est choisi préférentiellement dans le groupe constitué par MTSP, ATSP, TSES et les mélanges de ces monomères ; le comonomère C réticulant est lui-même un composé vinylique, choisi préférentiellement dans le groupe constitué par HGDMA, PGDMA, EGDMA, DVB et les mélanges de ces monomères.

Peuvent être ainsi obtenues des nanoparticules de PVNA fonctionnalisé Z et réticulé, en émulsion dans l'eau c'est-à-dire sous forme de latex (typiquement, par exemple, 100 g de polymère par litre d'eau). On rappelle que par "latex" de polymère, doit être entendu de manière connue un système de colloïde composé d'une suspension ou d'une émulsion de particules de polymère dans un milieu aqueux.

Comme reproduit à la Figure 1, ces nanoparticules de PVNA caractérisées par MET conformément au paragraphe I-1-A précédent, se présentent de préférence sous une forme sensiblement sphérique (donc sous forme de nanobilles), soit à l'état isolé soit en agrégats eux-mêmes éventuellement agglomérés. Le nombre de nanoparticules par agrégat est typiquement compris entre 2 et 100.

Le diamètre moyen de ces nanobilles, mesurable par exemple par MET comme indiqué au paragraphe I-1-A, est de préférence compris entre 10 et 100 nm, plus préférentiellement compris entre 10 et 60 nm, notamment entre 10 et 40 nm.

Dans la composition de caoutchouc de l'invention, le taux de charge PVNA est de préférence compris entre 10 et 100 pce (rappel, pce = parties en poids pour cent parties d'élastomère).

Grâce à la faible densité de cette dernière, ce taux est avantageusement compris entre 10 et 80 pce, de préférence compris entre 20 et 50 pce et plus préférentiellement encore strictement supérieur à 30 pce.

De préférence, la charge PVNA constitue en outre plus de 80%, plus préférentiellement plus de 90% (% en volume) de la totalité de la charge renforçante, une fraction minoritaire (de préférence moins de 20%, plus préférentiellement moins de 10% en volume) de cette totalité pouvant être constituée par une autre charge renforçante, par exemple une charge inorganique renforçante ou du noir de carbone. La charge PVNA peut avantageusement constituer la totalité de la charge renforçante.

Par charge inorganique renforçante, on entend ici une charge inorganique ou minérale, quelles que soient sa couleur et son origine (naturelle ou de synthèse), également appelée charge "blanche", charge "claire" ou encore charge "non-noire" (*"non-black filler"*) par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Comme charges inorganiques renforçantes susceptibles d'être utilisées en complément de la charge PVNA, conviennent notamment des charges minérales du type siliceuse, en particulier de la silice ($SiO_2$), ou du type alumineuse, en particulier de l'alumine ($Al_2O_3$). La silice utilisée peut être toute silice renforçante connue de l'homme du métier, notamment toute silice précipitée ou pyrogénée présentant une surface BET ainsi qu'une surface spécifique CTAB toutes deux inférieures à 450 $m^2/g$, de préférence de 30 à 400 $m^2/g$. A titre de silices précipitées hautement dispersibles (silices HDS), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices telles que décrites dans la demande WO 03/016387. Comme exemples d'alumines renforçantes, on peut citer les alumines "Baikalox" "A125" ou "CR125" de la société Baïkowski, "APA-100RDX" de Condea, "Aluminoxid C" de Degussa ou "AKP-G015" de Sumitomo Chemicals.

A la charge PVNA peut être également associé un noir de carbone, par exemple un noir du type HAF, ISAF, SAF, conventionnellement utilisé dans les pneumatiques (par exemple noirs hautement renforçants N115, N134, N234, N326, N330, N339, N347, N375, ou encore, selon les applications visées, les noirs de séries plus élevées, par exemple N660, N683, N772).

La quantité de noir de carbone présente dans la charge renforçante totale peut varier dans de larges limites, elle est de préférence inférieure à celle de la charge PVNA. Avantageusement, on peut utiliser du noir de carbone en faible ou très faible proportion, à un taux préférentiel inférieur à 10 pce, plus préférentiellement inférieur à 6 pce, par exemple entre 0 et 3 pce. Dans les intervalles indiqués, on bénéficie notamment des propriétés colorantes (agent de pigmentation noire) et anti-UV des noirs de carbone, sans pénaliser par ailleurs les performances typiques apportées par la charge polymère PVNA.

De manière préférentielle, le taux de charge renforçante totale dans les compositions de l'invention est compris dans un domaine allant de 20 à 400 pce, plus préférentiellement de 30 à 200 pce.

II-3. Masterbatch de charge PVNA

Selon le meilleur mode connu de réalisation de l'invention, les nanoparticules de PVNA précédemment décrites sont incorporées à la composition de caoutchouc de l'invention par l'intermédiaire d'un masterbatch, c'est-à-dire que ces particules sont préalablement mélangées avec au moins un élastomère diénique, pour faciliter leur incorporation ultérieure à la composition de caoutchouc finale.

Par "masterbatch" (ou "mélange-maître") doit être entendu de manière connue le mélange d'au moins un élastomère (plus généralement, d'un polymère) et une charge renforçante, mélange précurseur de la composition d'élastomère (ou polymère) finale, prête à l'emploi.

Ce masterbatch, comportant au moins la charge de PVNA fonctionnalisé telle que décrite précédemment et un élastomère diénique (ou mélange d'élastomères diéniques) constitue un autre objet de la présente invention.

Ce masterbatch est susceptible d'être préparé par un procédé lui-même objet de l'invention, comportant les étapes suivantes :

- partir d'un latex d'élastomère diénique et d'un latex de PVNA fonctionnalisé ;
- les mélanger intimement ;
- faire précipiter le mélange ainsi obtenu ;

- puis laver et sécher le précipité ainsi obtenu.

Le latex d'élastomère diénique peut consister en un élastomère déjà disponible en émulsion (par exemple un SBR émulsion), ou en un élastomère diénique initialement en solution (par exemple un SBR solution) qui est émulsifié dans un mélange de solvant organique et d'eau, généralement au moyen d'un agent tensio-actif (le solvant organique disparaissant au moment de la coagulation ou précipitation).

L'opération de mélangeage intime des deux latex est conduite de manière à bien disperser la charge polymère dans l'élastomère diénique, homogénéiser l'ensemble pour former un mélange de latex de concentration en matière solide préférentiellement comprise entre 20 et 500 g/l, plus préférentiellement entre 50 et 350 g/l. De préférence, les deux latex de départ sont dilués à l'eau avant mélangeage (par exemple 1 volume d'eau pour 1 volume de latex).

La précipitation du mélange des deux latex peut être réalisée par tout procédé connu de l'homme du métier, par exemple par une action mécanique ou préférentiellement par l'action d'un agent coagulant.

L'agent coagulant est tout composé liquide, miscible à l'eau mais non solvant (ou mauvais solvant) de l'élastomère, par exemple une solution aqueuse saline, de préférence un alcool ou un mélange de solvants comportant au moins un alcool (par exemple alcool et eau, alcool et toluène). Plus préférentiellement, l'agent coagulant est un alcool seul tel que méthanol ou isopropanol. La coagulation est conduite préférentiellement sous agitation, à température ambiante, dans un grand volume de coagulant ; typiquement, on utilise un volume d'alcool au moins double du volume total cumulé des deux latex dilués. Au cours de cette étape, on préfère verser le mélange des deux latex sur le coagulant, et non l'inverse.

Après lavage et séchage est obtenu le masterbatch se présentant sous forme de "miettes" de caoutchouc (*"rubber crumbs"*), comportant au moins l'élastomère diénique choisi (par exemple NR ou SBR) et les nanoparticules de PVNA noyées dans la matrice d'élastomère.

Peuvent être éventuellement incorporés au masterbatch divers additifs, qu'ils soient destinés au masterbatch proprement dit (par exemple un agent de stabilisation, du noir de carbone à titre d'agent colorant et anti-UV, un plastifiant, un antioxydant, etc.) ou à la composition de caoutchouc finale (par exemple un agent de couplage) à laquelle est destiné le masterbatch.

L'élastomère du masterbatch peut être tout élastomère diénique, identique ou non à celui (ou ceux) de la matrice de caoutchouc de l'invention. Il peut être avantageux d'utiliser le même élastomère diénique et d'ajuster le taux de PVNA dans le masterbatch au taux visé final pour la composition, de manière à ne pas avoir à ajouter d'élastomère diénique ultérieurement, au cours de la fabrication de la composition de l'invention.

II-4. Agent de couplage

Comme toute charge inorganique renforçante telle que silice, la charge PVNA fonctionnalisé Z nécessite d'utiliser un agent de couplage (encore appelé agent de liaison) pour établir une connexion suffisante entre la surface de ses particules et l'élastomère diénique, et assurer pleinement sa fonction de charge renforçante dans les compositions de l'invention.

On rappelle qu'un agent de couplage, au moins bifonctionnel, a notamment comme formule générale simplifiée " $U_1$-T-$U_2$", dans laquelle:

- $U_1$ représente un groupe fonctionnel (fonction "$U_1$") qui est capable de se lier physiquement et/ou chimiquement à la charge ;
- $U_2$ représente un groupe fonctionnel (fonction "$U_2$") capable de se lier physiquement et/ou chimiquement à l'élastomère diénique, par exemple par l'intermédiaire d'un atome de soufre ;
- T représente un groupe divalent permettant de relier $U_1$ et $U_2$.

Des agents de couplage (silice/élastomère diénique), d'efficacité variable, ont été décrits dans un très grand nombre de documents et sont bien connus de l'homme du métier. On peut utiliser tout agent de couplage susceptible d'assurer efficacement, dans les compositions de caoutchouc diénique utilisables pour la fabrication de pneumatiques, la liaison entre une charge inorganique renforçante telle que silice et un élastomère diénique, en particulier des organosilanes ou des polyorganosiloxanes polyfonctionnels porteurs des fonctions $U_1$ et $U_2$.

On utilise notamment des silanes polysulfurés, dits "symétriques" ou "asymétriques" selon leur structure particulière, tels que décrits par exemple dans les demandes WO03/002648 et WO03/002649.

Conviennent en particulier pour la mise en oeuvre de l'invention, sans que la définition ci-après soit limitative, des silanes polysulfurés dits "symétriques" répondant à la formule générale (III) suivante:

(III) $Q - A - S_n - A - Q,$

dans laquelle:

- n est un entier de 2 à 8 (de préférence de 2 à 5) ;
- A est un radical hydrocarboné divalent (de préférence des groupements alkylène en $C_1$-$C_{18}$ ou des groupements arylène en $C_6$-$C_{12}$, plus particulièrement des alkylènes en $C_1$-$C_{10}$, notamment en $C_1$-$C_4$, en particulier le propylène) ;
- Q répond à l'une des formules ci-après:

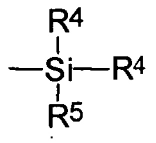 ; 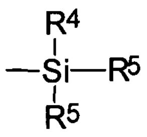 ; 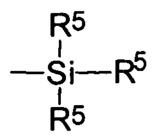 ,

dans lesquelles:
- les radicaux $R^4$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle) ;
- les radicaux $R^5$, substitués ou non substitués, identiques ou différents entre eux, représentent un groupe hydroxyle, alkoxyle en $C_1$-$C_{18}$ ou cycloalkoxyle en $C_5$-$C_{18}$ (de préférence un groupe choisi parmi hydroxyle, alkoxyles en $C_1$-$C_8$ et cycloalkoxyles en $C_5$-$C_8$, plus préférentiellement encore un groupe choisi parmi hydroxyle et alkoxyles en $C_1$-$C_4$, en particulier parmi hydroxyle, méthoxyle et éthoxyle).

Dans le cas d'un mélange de silanes polysulfurés répondant à la formule (III) ci-dessus, notamment des mélanges usuels disponibles commercialement, la valeur moyenne des "n" est un nombre fractionnaire de préférence compris entre 2 et 5, plus préférentiellement proche de 4. Mais l'invention peut être aussi avantageusement mise en oeuvre par exemple avec des silanes disulfurés (n = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$.

On citera également comme exemples d'agents de couplage avantageux les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure ou disulfure de bis-monoéthoxy-diméthylsilylpropyl tel que décrits dans la demande WO02/083782.

A titre d'exemples d'agents de couplage autres que les alkoxysilanes polysulfurés précités, on citera notamment des polyorganosiloxanes bifonctionnels ou encore des polysulfures d'hydroxysilane ($R^5$ = OH dans la formule III ci-dessus) tels que décrits dans les demandes WO 02/30939 et WO 02/31041.

Dans les compositions conformes à l'invention, le taux d'agent de couplage est avantageusement inférieur à 10 pce, étant entendu qu'il est en général souhaitable d'en utiliser le moins possible. Son taux est préférentiellement inférieur à 7 pce, plus préférentiellement inférieur à 5 pce, en particulier compris entre 0,5 et 4 pce.

L'agent de couplage pourrait être préalablement greffé (via la fonction "$U_2$") sur l'élastomère diénique de la composition de l'invention, l'élastomère ainsi fonctionnalisé ou "précouplé" comportant alors la fonction "$U_1$" libre pour la charge polymère. L'agent de couplage pourrait également être préalablement greffé (via la fonction "$U_1$") sur la charge PVNA via sa fonction Z, la charge ainsi "précouplée" pouvant ensuite être liée à l'élastomère diénique par l'intermédiaire de la fonction libre "$U_2$". On préfère toutefois, notamment pour des raisons de meilleure mise en oeuvre des compositions à l'état cru, utiliser l'agent de couplage soit greffé sur la charge polymère, soit à l'état libre (c'est-à-dire non greffé).

II-5. Additifs divers

Les compositions de caoutchouc conformes à l'invention comportent également tout ou partie des additifs usuels habituellement utilisés dans les compositions d'élastomères destinées à la fabrication de pneumatiques, comme par exemple des plastifiants ou des huiles d'extension, que ces derniers soient de nature aromatique ou non-aromatique, des pigments, des agents de protection tels que cires anti-ozone, anti-ozonants chimiques, des agents anti-oxydants, des agents anti-fatigue, des résines renforçantes ou plastifiantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

De préférence, ces compositions comportent, à titre d'agent plastifiant préférentiel non aromatique ou très

faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés. Le taux global d'un tel agent plastifiant préférentiel est de préférence compris entre 10 et 50 pce, plus préférentiellement entre 20 et 40 pce.

Parmi ces résines plastifiantes hydrocarbonées (on rappelle que l'appellation "résine" est réservée par définition à un composé solide), on citera notamment les résines d'homo- ou copolymères d'alphapinène, betapinène, dipentène ou polylimonène, coupe C5, par exemple de copolymère coupe C5/styrène ou de copolymère coupe C5/coupe C9, utilisables seules ou en combinaison avec des huiles plastifiantes comme des huiles MES ou TDAE.

A la charge renforçante précédemment décrite (i.e., charge polymère PVNA plus noir de carbone et/ou charge inorganique telle que silice HDS, le cas échéant) peuvent être également ajoutés, selon l'application visée, des charges inertes (non renforçantes) telles que particules d'argile, bentonite, talc, craie, kaolin, utilisables par exemple dans des flancs ou des bandes de roulement de pneumatique colorés.

Ces compositions peuvent également contenir, en complément des agents de couplage, des activateurs de couplage, des agents de recouvrement (comportant par exemple la seule fonction $U_1$) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des $\alpha,\omega$-dihydroxy-polyorganosiloxanes (notamment des $\alpha,\omega$-dihydroxy-polydiméthylsiloxanes).

<u>II-6. Préparation des compositions de caoutchouc</u>

Les compositions de l'invention sont fabriquées dans des mélangeurs appropriés, en utilisant par exemple deux phases de préparation successives selon une procédure générale bien connue de l'homme du métier : une première phase de travail ou malaxage thermomécanique (parfois qualifiée de phase "non-productive") à haute température, jusqu'à une température maximale prédéterminée (ici comprise entre 110°C et 190°C, de préférence entre 120°C et 170°C), suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon le meilleur mode connu de réalisation, les nanoparticules de PVNA sont incorporées à la composition de l'invention sous la forme du masterbatch précédemment décrit.

A titre d'exemple, tous les constituants des compositions de l'invention, à l'exception du système de vulcanisation, en particulier la charge PVNA dans son masterbatch et son agent de couplage, sont mélangés de manière intime, par malaxage, au cours de la première phase dite non-productive, c'est-à-dire que l'on introduit dans le mélangeur et que l'on malaxe thermomécaniquement, en une ou plusieurs étapes, ces différents constituants de base jusqu'à atteindre la température maximale prédéfinie. La durée totale du malaxage, dans cette phase non-productive, est de préférence comprise entre 1 et 15 min.

Après refroidissement du mélange ainsi obtenu au cours de la première phase non-productive, on incorpore alors le système de vulcanisation à basse température, généralement dans un mélangeur externe tel qu'un mélangeur à cylindres ; le tout est alors mélangé (phase productive) pendant quelques minutes, par exemple entre 2 et 15 min.

Le système de vulcanisation proprement dit est préférentiellement à base de soufre et d'un accélérateur. On peut utiliser tout composé susceptible d'agir comme accélérateur de vulcanisation des élastomères diéniques en présence de soufre, en particulier ceux choisis dans le groupe constitué par disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI") et les mélanges de ces composés. De préférence, on utilise un accélérateur primaire du type sulfénamide.

A ce système de vulcanisation peuvent venir s'ajouter, incorporés au cours de la première phase non-productive et/ou au cours de la phase productive, divers accélérateurs secondaires ou activateurs de vulcanisation connus, tels qu'oxyde de zinc, acides gras comme l'acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

La vulcanisation (ou cuisson) est conduite de manière connue à une température généralement comprise entre

130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

## III. EXEMPLES DE REALISATION

III-1 Essai 1

Dans les exemples de réalisation qui suivent, deux charges de polyméthacrylate fonctionnalisé (Z) et réticulé sont synthétisées par polymérisation radicalaire de trois monomères différents - méthacrylate de méthyle (MMA), diméthacrylate d'éthylène glycol (EGDMA) et charge A : méthacrylate de triméthoxysilylpropyle (MPST) ou charge B : acrylate de triméthoxysilylpropyle (ATSP)- puis incorporées à une composition de caoutchouc pour pneumatique sous la forme de masterbatchs obtenus par coprécipitation d'un latex de la charge PVNA et d'un latex d'un élastomère diénique (SBR).

Selon un mode de réalisation particulièrement préféré, le taux pondéral de comonomère B porteur de la fonction Z (ici, MTSP ou ATSP) est compris entre 20 et 30%, celui du comonomère C réticulant (ici EGDMA) est compris entre 10% et 30%.

A. Synthèse des nanoparticules de polyméthacrylate

Les différents monomères sont préalablement soumis à un barbotage d'azote, ainsi que toutes les solutions aqueuses utilisées à l'exception de la solution de SDS (barbotage à l'état de poudre). La réaction est menée dans un réacteur de 1,5 litres muni d'une agitation mécanique. Après introduction de 840 ml d'eau et un barbotage à l'azote de 30 min sous agitation, sont introduits successivement 50 ml d'une solution aqueuse de dodécylsulfate de sodium (SDS) à 0,9 mol/l à titre d'agent tensioactif, 50 ml à 1 mol/l d'une solution tampon équimolaire d'hydrogéno-phosphate de sodium et de dihydrogénophosphate d'ammonium. A cette solution tamponnée à pH 7, agitée à 350 tr/min et chauffée à 60°C, est ajoutée la charge monomère dans l'ordre qui suit :

Charge A : 48,7 g de MMA (soit une fraction pondérale de 47,1%), 29,1 g de EGDMA (fraction pondérale de 28,1%) puis 25,6 g de MTSP (fraction pondérale de 24,8%).

Charge B : 48,7 g de MMA (soit une fraction pondérale de 47,8%), 29,1 g de EGDMA (fraction pondérale de 28,6%) puis 24,1 g de ATSP (fraction pondérale de 23,7%).

Sous forte agitation (350 tr/min) sont alors ajoutés à l'émulsion résultante 45 ml d'une solution aqueuse de persulfate de potassium (0,125 mol/l). Après 60 min à 60°C sous agitation, 18 ml d'une solution aqueuse d'hydroquinone (0,5 mol/l) sont ajoutés au milieu de polymérisation. Le milieu réactionnel est refroidi avant mélange avec l'élastomère (taux de conversion, mesuré par extrait sec : charge A : 99%; charge B : 94%).

Les polyméthacrylates fonctionnalisés et réticulés ainsi obtenus se présentent sous la forme d'un latex comportant environ 10% en poids de solide (PVNA) et le complément (environ 90%) en eau.

La caractérisation du latex de charge A est réalisée conformément au paragraphe I-1-A. Le cliché MET reproduit à la Figure 1 montre que les nanoparticules (particules élémentaires) de l'invention se présentent ici sous forme de nanobilles qui ont en majorité un diamètre compris entre 20 et 60 nm. Le diamètre circulaire moyen est égal à 34 nm (écart-type 6 nm).

A ce stade, le polyméthacrylate (charge A) est isolé et séché pour évaluation de son taux de fonctionnalisation (Z) apporté par le monomère MTSP, par dosage du taux de silicium, en procédant comme suit :

- une première étape de solubilisation de l'échantillon en milieu aqueux par calcination puis par fusion alcaline des cendres obtenues ;
- une seconde étape de dosage quantitatif du silicium par spectrométrie d'émission atomique par plasma induit (ICP/AES).

Plus précisément, on opère de la manière suivante : l'échantillon est calciné à 525°C durant 2 heures. La fusion est ensuite conduite sur les cendres obtenues, à 1150°C (± 50°C) avec du tétraborate de lithium (par exemple 2 g pour 1 g de charge calcinée), pendant environ 25 min. Après refroidissement, la totalité de la perle de fusion obtenue est solubilisée à 80°C dans de l'acide chlorhydrique dilué à 2% dans l'eau. La solution est ensuite transférée et ajustée en fiole jaugée.

Le dosage du silicium est alors réalisé, sur le contenu de la fiole jaugée, par ICP/AES : la solution aqueuse est envoyée dans un plasma d'argon via un système d'introduction, où elle subit les phases de désolvatation, d'atomisation puis d'excitation/ionisation des atomes présents. La raie d'émission du silicium à 251,611 nm est ensuite sélectionnée par le biais d'un monochromateur, puis quantifiée par rapport à une courbe d'étalonnage préparée à partir d'une solution étalon certifiée de l'élément correspondant (l'intensité I de la raie émise étant proportionnelle à la concentration C de l'élément correspondant).

Le résultat est exprimé en % massique de Silicium rapporté à l'échantillon sec (préalablement séché à 105°C durant 2 heures), selon la formule :
dans laquelle :

$$\% Si = C.V. (100 / M)$$

- C = concentration en Si exprimée en mg/l ;
- V = volume de la fiole jaugée en l ;
- M = masse de l'échantillon en mg.

Le taux de silicium ainsi mesuré est égal à 2,6% (± 0.2%), donc quasiment égal au taux théorique (soit 2,8%).

La densité des nanoparticules de charge A est mesurée sur la poudre, à l'aide d'un pycnomètre à hélium : la valeur obtenue est égale à 1,25 g/cm$^3$.

B. Préparation du masterbatch

Les latex de polyméthacrylate sont ensuite incorporés directement à un élastomère diénique SBR pour obtention d'un masterbatch comme indiqué au paragraphe II-2 précédent. Le taux de charge polyméthacrylate visé dans le masterbatch, comme dans la composition de caoutchouc visée finale, est de 39 pce (parties en poids pour cent parties d'élastomère).

Le latex de SBR est préparé de manière connue de l'homme de l'art, dans les conditions suivantes : température de polymérisation : 5°C ; tensioactif : dodécylsulfate de sodium ; amorceur : système redox sel de fer II/hydroperoxyde. La conversion est de l'ordre de 50 à 60%. Le SBR ainsi fabriqué présente les caractéristiques suivantes : viscosité inhérente à 0,1 g/dl dans le toluène à 25°C : 3,11 ; viscosité Mooney (MS) égale à 67 ; Tg (DSC) =-52°C ; microstructure : styrène 23,6%, phase butadiène : vinyl 15,0%, trans 70.1%, cis 14.9%.

La quantité de matière sèche du latex de SBR est déterminée par pesée, sur extrait sec, avant de préparer le masterbatch. Le latex de SBR est dilué 3 fois à l'eau, soit :

Charge A : 652 ml de latex de SBR à 177,1 g/l (115,4 g de SBR) et 1304 ml d'eau de dilution.

Charge B : 408 ml de latex de SBR à 195,9 g/l (80 g de SBR) et 820 ml d'eau de dilution

Dès les synthèses terminées, les latex de charge polyméthacrylate sont refroidis à température ambiante puis ajoutés aux latex de SBR dilués à raison de 39 pce de charge, soit :

Charge A : 497 ml de latex de charge polyméthacrylate à 90,5 g/l (45 g de charge).

Charge B : 368 ml de latex de charge polyméthacrylate à 84,8 g/l (31,2 g de charge).

Le mélange résultant est homogénéisé doucement. A raison de 100 ml/min, le mélange est alors ajouté sur charge A : 5000 ml; charge B : 3500 ml de méthanol agité à 350 tr/min. Le précipité ainsi obtenu est filtré sur papier filtre, rincé avec de l'eau jusqu'à faible moussage résiduel constant des eaux de lavage et test négatif des eaux de lavage au nitrate d'argent. Le précipité ainsi lavé est séché sous pression réduite sous azote à 60°C pendant 3 à 4 jours. 156 g (charge A) et 107,7 g (charge B) de masterbatch sec sont ainsi récupérés.

C. Préparation des compositions de caoutchouc

Une composition témoin (charge silice HDS) est préparée de manière conventionnelle, comme suit : dans un mélangeur interne, dont la température initiale de cuve est d'environ 90°C, on introduit tout d'abord ("phase non-productive") l'élastomère SBR préalablement étendu avec 37,5 pce d'huile, ainsi qu'une partie de la charge. Après un temps approprié de malaxage, de l'ordre de 1 min, on ajoute l'agent de couplage et la partie restante de charge. Les autres ingrédients, à l'exception du système de vulcanisation, sont ajoutés au bout de 2 min. Le mélangeur interne est alors

rempli à 75%. On conduit alors un travail thermomécanique d'une durée de 6 min environ, avec une vitesse moyenne des palettes de 70 tours/min, jusqu'à obtenir une température de tombée d'environ 135°C.

On procède de manière identique pour une deuxième et troisième composition incorporant cette fois la charge PVNA (polyméthacrylate) conforme à l'invention, à la différence près que la charge PVNA et l'élastomère diénique sont introduits en une seule fois dès le début, sous forme du masterbatch précédemment préparé comportant 39 pce de particules de PVNA ; puis l'huile d'extension (37,5 pce d'huile TDAE) est incorporée de manière progressive.

Après le travail thermomécanique de malaxage, on récupère le mélange obtenu, on le refroidit puis on ajoute le système de vulcanisation (soufre et accélérateur primaire type sulfénamide) sur un mélangeur externe à 30°C, en mélangeant le tout ("phase productive") pendant un temps approprié (entre 5 et 12 min).

Les compositions ainsi obtenues sont ensuite soit calandrées sous la forme de plaques (épaisseur de 2 à 3 mm) de caoutchouc pour la mesure de leurs propriétés mécaniques, soit extrudées sous la forme d'un produit semi-fini pour pneumatique, par exemple une bande de roulement. La vulcanisation (cuisson) est effectuée à 150°C pendant 40 min, sous pression.

D. Test comparatif de caoutchouterie

Le but de l'essai est de comparer les performances des nanoparticules de PVNA à celles de la charge inorganique conventionnelle (silice HDS).

On compare pour cela les trois compositions préparées selon le paragraphe C qui précède, dont la formulation générale est conventionnelle pour des bandes de roulement de pneumatiques à hautes performances, combinant faible résistance au roulement et résistance élevée à l'usure (pneus tourisme à faible consommation d'énergie dits "Pneus Verts"). La silice HDS choisie pour renforcer la composition témoin est une silice de grade pneumatique présentant de manière connue un très haut pouvoir renforçant ("Zeosil" type "1165MP" de la société Rhodia - densité d'environ 2,1 g/cm$^3$).

Pour la composition témoin, l'élastomère diénique utilisé est le SBR dont la synthèse est décrite au paragraphe III-2, préalablement étendu avec 37,5% d'huile TDAE (soit 37,5 pce d'huile pour 100 pce de SBR sec).

Les trois compositions testées sont strictement identiques à la nature de la charge renforçante près :

- composition C-1 (témoin) : silice HDS ;
- composition C-2 (invention) : PVNA fonctionnalisé Z (MTSP)
- composition C-3 (invention) : PVNA fonctionnalisé Z (ATSP).

Le taux de charge renforçante a été ajusté à iso-fraction volumique de charge (même volume - soit environ 19% - de charge dans chaque composition). La surface spécifique de la charge polymère étant plus faible, la quantité d'agent de couplage TESPT introduit dans les compositions C-2 et C-3 est donc plus faible.

Dans les compositions C-2 et C-3 (invention), les nanoparticules de PVNA représentent environ 97% (en volume) de la totalité de la charge renforçante, cette dernière comportant une faible proportion (2 pce) de noir de carbone.

Les tableaux 1 et 2 donnent successivement la formulation des différentes compositions (tableau 1 - taux des différents produits exprimés en pce), leurs propriétés avant et après cuisson à 150°C pendant 40 min (tableau 2).

L'examen des différents résultats du tableau 2 montre pour les compositions C-2 et C-3 selon l'invention, comparée à la composition témoin C-1 :

- à l'état cru, une cinétique de vulcanisation (constante K) améliorée ;
- une réduction très sensible de la masse volumique (mesurée à l'aide d'un pycnomètre à hélium), d'environ 16% par rapport à la composition témoin (différence bien sûr maintenue après cuisson) ;
- après cuisson, des valeurs de module équivalentes sous forte déformation (M100, M300, M400), indicateur clair pour l'homme du métier d'un niveau de renforcement élevé, équivalent à celui apporté par la silice HDS de référence ;
- enfin, ce qui n'est pas le moindre, des propriétés d'hystérèse qui, de manière inattendue, sont très sensiblement améliorées comme illustré par une forte diminution des valeurs de $\tan(\delta)_{max}$ et de $\Delta G^*$, ce qui est un indicateur reconnu d'une résistance au roulement et d'un échauffement réduits.

III-2 Essai 2

Dans l'exemple de réalisation qui suit, la charge de polyméthacrylate fonctionnalisé (Z) et réticulé synthétisée au paragraphe III-1-A (charge B) par polymérisation radicalaire de trois monomères différents - méthacrylate de méthyle (MMA), diméthacrylate d'éthylène glycol (EGDMA) et acrylate de triméthoxysilylpropyle (APST) est incorporée à une composition de caoutchouc pour pneumatique sous la forme d'un masterbatch obtenu par coprécipitation du latex de la charge PVNA et d'un latex de NR.

A. Préparation du masterbatch

Le latex de polyméthacrylate est incorporé directement à du caoutchouc naturel. Le taux de charge polyméthacrylate visé dans le masterbatch est de 39 pce (parties en poids pour cent parties d'élastomère).

La quantité de matière sèche du latex de NR est déterminée par pesée, sur extrait sec, avant de préparer le masterbatch. Le latex de NR est dilué 3 fois à l'eau, soit 447 ml de latex de NR à 178,8 g/l (80 g de NR) et 900 ml d'eau de dilution.

Dès sa synthèse terminée, le latex de charge polyméthacrylate (Charge B synthétisée au paragraphe III-1-A) est refroidi à température ambiante puis ajouté au latex de NR dilué à raison de 39 pce de charge, soit 368 ml de latex de charge polyméthacrylate à 84,8 g/l (31,2 g de charge). Le mélange résultant est homogénéisé doucement. A raison de 100 ml/min, le mélange est alors ajouté sur 3500 ml de méthanol agité à 350 tr/min. Le précipité ainsi obtenu est filtré sur papier filtre, rincé avec de l'eau jusqu'à faible moussage résiduel constant des eaux de lavage et test négatif des eaux de lavage au nitrate d'argent. Le précipité ainsi lavé est séché sous pression réduite sous azote à 60°C pendant 3 à 4 jours. 110 g de masterbatch sec sont ainsi récupérés.

B. Tests de caoutchouterie

Deux compositions de caoutchouc NR sont ensuite préparées comme indiqué précédemment pour l'Essai 1 (température de tombée d'environ 145°C), ces deux compositions différant seulement par la nature de leur charge renforçante, comme suit:

- composition C-4 (témoin) : silice HDS ;
- composition C-5 (invention) : PVNA fonctionnalisé **ATSP.**

A titre d'exemples d'application préférentiels, de telles compositions de caoutchouc sont typiquement utilisées dans les parties de systèmes de liaison au sol, notamment de pneumatiques, utilisant habituellement des matrices de caoutchouc à base de NR, comme par exemple les appuis internes de sécurité pour pneumatiques, les flancs, les zones bourrelet des pneumatiques, les sous-couches de bandes de roulement ainsi que les bandes de roulement de ces pneumatiques notamment pour véhicule Poids-lourd.

Le taux de charge renforçante a été ajusté à iso-fraction volumique de charge (même volume - soit environ 17% - de charge dans chaque composition). La surface spécifique de la charge polymère étant plus basse, la quantité d'agent de couplage TESPT introduit dans la composition C-5 est donc nettement plus faible. Dans la composition C-5 de l'invention, la charge PVNA représente environ 97% (en volume), de la totalité de la charge renforçante, cette dernière comportant une faible proportion (1 pce) de noir de carbone.

Les tableaux 3 et 4 donnent successivement la formulation des différentes compositions (tableau 3 - taux des différents produits exprimés en pce), leurs propriétés avant et après cuisson à 150°C pendant 25 min (tableau 4).

L'examen des différents résultats du tableau 4 montre, pour la composition conforme à l'invention C-5 comparée à la composition témoin C-4 :

- à l'état cru, une sécurité au grillage (Ti) et une cinétique de vulcanisation (constante K) voisines ;
- une réduction très sensible de la masse volumique (-14% environ) ;
- après cuisson, des valeurs plus élevées de module sous très forte déformation (voir valeurs de M600) ce qui montre un niveau de renforcement élevé offert par la charge PVNA, au moins égal sinon supérieur à celui offert par la silice HDS de référence ;
- enfin et surtout, ce qui confirme largement tous les résultats précédents observés avec un élastomère diénique synthétique (SBR), des propriétés d'hystérèse qui sont cette fois encore fortement améliorées (valeurs de $(\tan(\delta)_{max}$ et de $\Delta G^*$ très sensiblement réduites).

En conclusion, la charge polymère spécifique des compositions conformes à l'invention, grâce à sa densité très fortement réduite par rapport à une charge renforçante conventionnelle telle que noir de carbone ou silice HDS, permet de diminuer de manière très sensible le poids de ladite composition.

Cet objectif est atteint non seulement sans dégradation du renforcement, synonyme de résistance à l'usure ou à la fissuration, par rapport à ces charges conventionnelles, mais encore en permettant une réduction notable de l'hystérèse, synonyme d'une résistance au roulement ou d'un échauffement encore améliorés par rapport à une charge inorganique renforçante conventionnelle telle qu'une silice HDS.

Enfin, un avantage remarquable de la charge PVNA doit être souligné : la masse volumique de la matrice polymérique devenant sensiblement égale à celle de la charge PVNA elle-même, il devient ainsi possible d'augmenter le taux de charge renforçante sans augmenter la densité de ladite matrice polymérique.

**Tableau 1**

| Composition N°: | C-1 | C-2 | C-3 |
|---|---|---|---|
| SBR (1) | 100 | 100 | 100 |
| silice HDS (2) | 77 | - | - |
| charge PVNA (3) | - | 39 | - |
| charge PVNA (8) | - | - | 39 |
| agent de couplage (4) | 6.2 | 1.8 | 1.8 |
| noir de carbone (N234) | 2 | 2 | 2 |
| huile (5) | 37.5 | 37.5 | 37.5 |
| ZnO | 2.5 | 2.5 | 2.5 |
| acide stéarique | 2 | 2 | 2 |
| antioxydant (6) | 1.9 | 1.9 | 1.9 |
| soufre | 1.5 | 1.5 | 1.5 |
| accélérateur (7) | 2.5 | 2.5 | 2.5 |

(1) Elastomère SBR (synthèse décrite au paragraphe III-B) ;
(2) silice HDS ("Zeosil" type "1165MP" de la société Rhodia) ;
(3) PVNA fonctionnalisé Z (synthèse selon paragraphe III-A : Charge A) ;
(4) TESPT ("Si69" de la société Degussa) ;
(5) huile d'extension TDAE ("Vivatec 500" de la société Klaus Dahleke) ;
(6) N-1,3 diméthylbutyl N-phénylparaphénylènediamine ("Santoflex 6-PPD" de la société Flexsys) ;
(7) N-cyclohexyl-2-benzothiazylsulfénamide ("Santocure CBS" de la société Flexsys)
(8) PVNA fonctionnalisé Z (synthèse selon paragraphe III-A : Charge B) ;

**Tableau 2**

| Composition N°: | C-1 | C-2 | C-3 |
|---|---|---|---|
| *<u>Propriétés avant cuisson :</u>* | | | |
| K ($min^{-1}$) | 0,105 | 0,151 | 0.217 |
| masse volumique ($g/cm^3$) | 1.19 | 1.01 | 1.02 |
| *<u>Propriétés après cuisson:</u>* | | | |
| M100 (MPa) | 3.5 | 3.5 | 4.8 |
| M300 (MPa) | 11.1 | 10.6 | 13.3 |
| M400 (MPa) | 17.0 | 17.0 | 18.8 |
| $\Delta G^*$ | 5.6 | 0.8 | 1.2 |
| $\tan(\delta)_{max}$ | 0.300 | 0.185 | 0.187 |

**Tableau 3**

| Composition N°: | C-4 | C-5 |
|---|---|---|
| NR (1) | 100 | 100 |
| silice HDS (2) | 50 | - |
| charge PVNA (3) | - | 25.7 |
| noir de carbone (N234) | 1 | 1 |
| agent de couplage (4) | 4 | 1.16 |

(suite)

| Composition N°: | C-4 | C-5 |
|---|---|---|
| ZnO | 3 | 3 |
| acide stéarique | 2.5 | 2.5 |
| antioxydant (5) | 1.5 | 1.5 |
| soufre | 1.5 | 1.5 |
| accélérateur (6) | 1.8 | 1.8 |

(1) caoutchouc naturel ;
(2) silice HDS ("Zeosil" type "1165MP" de la société Rhodia) ;
(3) PVNA fonctionnalisé ATSP (synthétisée selon paragraphe III-1-A, charge B);
(4) TESPT ("Si69" de la société Degussa) ;
(5) N-1,3 diméthylbutyl N-phénylparaphénylènediamine ("Santoflex 6-PPD" de la société Flexsys) ;
(6) N-cyclohexyl-2-benzothiazylsulfénamide ("Santocure CBS" de la société Flexsys)..

**Tableau 4**

| Composition N°: | C-4 | C-5 |
|---|---|---|
| *Propriétés avant cuisson :* | | |
| K ($min^{-1}$) | 0.327 | 0.307 |
| masse volumique ($g/cm^3$) | 1.16 | 1.00 |
| *Propriétés après cuisson:* | | |
| M100 (MPa) | 3.9 | 4.8 |
| M300 (MPa) | 13.2 | 13.0 |
| M400 (MPa) | 19.1 | 19.9 |
| M600 (MPa) | 25.8 | 28.8 |
| $\Delta G^*$ | 2.51 | 1.31 |
| $\tan(\delta)_{max}$ | 0.199 | 0.144 |

## Revendications

**1.** Composition de caoutchouc à base d'au moins un élastomère diénique, une charge polymère, un agent de couplage assurant la liaison entre la charge polymère et l'élastomère, **caractérisée en ce que** ladite charge polymère comporte des nanoparticules de polymère vinylique non aromatique porteur d'une fonction notée Z de formule $\equiv$ Si - X, X représentant un groupe hydroxyle ou hydrolysable.

**2.** Composition selon la revendication 1, X étant un halogène.

**3.** Composition selon la revendication 1, X répondant à la formule OR dans laquelle R représente l'hydrogène ou un groupe hydrocarboné monovalent, linéaire ou ramifié.

**4.** Composition selon la revendication 3, Z répondant à l'une des formules :

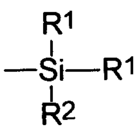 ; 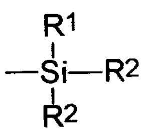 ; 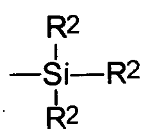 ,

dans lesquelles :

- les radicaux $R^1$, substitués ou non substitués, identiques ou différents entre eux, sont choisis dans le groupe constitué par les alkyles en $C_1$-$C_8$, les cycloalkyles en $C_5$-$C_8$ et les aryles en $C_6$-$C_{12}$ ;
- les radicaux $R^2$, substitués ou non substitués, identiques ou différents entre eux, sont choisis dans le groupe constitué par l'hydroxyle, les alkoxyles en $C_1$-$C_8$ et les cycloalkoxyles en $C_5$-$C_8$.

**5.** Composition selon l'une quelconque des revendications 1 à 4, le polymère vinylique non aromatique étant un copolymère d'au moins un premier monomère (noté monomère A) vinylique non aromatique et d'au moins un second monomère (noté monomère B) fonctionnalisé porteur de la fonction Z de formule ≡ Si - X.

**6.** Composition selon la revendication 5, le monomère A étant porteur d'une ou plusieurs, de préférence une seule, fonction(s) polymérisable(s) par voie radicalaire.

**7.** Composition selon la revendication 6, le monomère A répondant à la formule (II) :

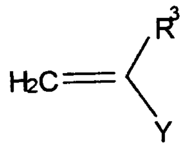

dans laquelle :

- le radical $R^3$ est choisi dans le groupe constitué par l'hydrogène, les alkyles en $C_1$-$C_8$ et les cycloalkyles en $C_5$-$C_8$ ;
- le radical Y est choisi dans le groupe constitué par les halogènes, les radicaux OH, OR', SR', C=N, C(O)OH, C(O)OR', C(O)N(R'R"), C(O)R' et OC(O)R' dans lesquels R' et R", identiques ou différents, sont choisis dans le groupe constitué par les alkyles comportant de 1 à 12 atomes de carbone, et les aryles, aralkyles ou alkaryles comportant de 6 à 20 atomes de carbone.

**8.** Composition selon l'une quelconque des revendications 5 à 7, le monomère B étant choisi dans le groupe constitué par les acrylates d'hydroxysilyl-alkyl(C1-C4), les méthacrylates d'hydroxysilyl-alkyl(C1-C4), les acrylates d'alkoxy(C1-C4)silyl-alkyl(C1-C4), les méthacrylates d'alkoxy(C1-C4)silyl-alkyl(C1-C4) et les mélanges de ces composés.

**9.** Composition selon l'une quelconque des revendications 5 à 7, le comonomère B étant choisi dans le groupe constitué par les styryl-alkyl(C1-C4)-hydroxysilanes, les styryl-alkyl(C1-C4)-alkoxy(C1-C4)silanes et les mélanges de ces composés.

**10.** Composition selon l'une quelconque des revendications 1 à 9, le polymère vinylique non aromatique étant en outre réticulé par la présence d'au moins un comonomère (noté monomère C) réticulant au moins bifonctionnel, de préférence polymérisable par réaction d'addition.

**11.** Composition selon l'une quelconque des revendications 1 à 10, le diamètre moyen des nanoparticules étant compris entre 10 et 100 nm.

**12.** Composition selon la revendication 10 ou 11, le polymère vinylique non aromatique étant un copolymère de méthacrylate de méthyle (monomère A), méthacrylate de triméthoxysilylpropyle (monomère B) et diméthacrylate d'éthylène glycol (monomère C).

**13.** Procédé d'obtention d'une composition de caoutchouc dans lequel on incorpore à au moins un élastomère diénique, au moins une charge polymère, un agent de couplage assurant la liaison entre la charge polymère et l'élastomère, et en ce qu'on malaxe thermomécaniquement le tout, en une ou plusieurs étapes, jusqu'à atteindre une température maximale comprise entre 110°C et 190°C, **caractérisé en ce que** ladite charge polymère comporte des nanoparticules de polymère vinylique non aromatique fonctionnalisé ≡ Si - X, X représentant un groupe hydroxyle ou hydrolysable.

**14.** Masterbatch à base d'au moins un élastomère diénique et une charge polymère, **caractérisé en ce que** ladite charge polymère comporte des nanoparticules de polymère vinylique non aromatique porteur d'une fonction notée

Z de formule ≡ Si - X, X représentant un groupe hydroxyle ou hydrolysable.

**15.** Procédé d'obtention d'un masterbatch selon la revendication 14 comportant au moins un élastomère diénique et une charge polymère, comportant les étapes suivantes :

- partir d'un latex de l'élastomère diénique et d'un latex de la charge polymère ;
- les mélanger intimement ;
- faire précipiter le mélange ainsi obtenu ;
- puis laver et sécher le précipité ainsi obtenu,

**caractérisé en ce que** ladite charge polymère comporte des nanoparticules de polymère vinylique non aromatique porteur d'une fonction notée Z de formule ≡ Si - X, X représentant un groupe hydroxyle ou hydrolysable.

**16.** Utilisation d'un masterbatch selon la revendication 14 pour la fabrication d'une composition d'élastomère diénique.

**17.** Utilisation, pour la fabrication d'articles ou de produits semi-finis en caoutchouc, d'une composition de caoutchouc conforme à l'une quelconque des revendications 1 à 12

**18.** Article ou produit semi-fini en caoutchouc comportant une composition selon l'une quelconque des revendications 1 à 12.

**19.** Pneumatique comportant une composition de caoutchouc selon l'une quelconque des revendications 1 à 12.

**20.** Produit semi-fini pour pneumatique comportant une composition de caoutchouc conforme à l'une quelconque des revendications 1 à 12.

## Patentansprüche

**1.** Kautschukzusammensetzung auf Basis mindestens eines Dienelastomers, eines polymeren Füllstoffs und eines Kupplungsmittels, das die Bindung zwischen dem polymeren Füllstoff und dem Elastomer gewährleistet, **dadurch gekennzeichnet, dass** der polymere Füllstoff Nanopartikel aus nichtaromatischem Vinylpolymer mit einer als Z bezeichneten Funktion der Formel ≡Si-X, wobei X für eine Hydroxylgruppe oder eine hydrolysierbare Gruppe steht, umfasst.

**2.** Zusammensetzung nach Anspruch 1, wobei X ein Halogen ist.

**3.** Zusammensetzung nach Anspruch 1, wobei X der Formel OR entspricht, worin R für Wasserstoff oder eine einwertige, lineare oder verzweigte Kohlenwasserstoffgruppe steht.

**4.** Zusammensetzung nach Anspruch 3, wobei Z einer der folgenden Formeln entspricht:

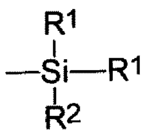 ; 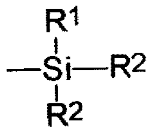 ; 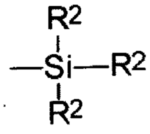 ,

worin:

- die Reste $R^1$, die substituiert oder unsubstituiert und gleich oder voneinander verschieden sind, aus der Gruppe bestehend aus $C_1$-$C_8$-Alkylgruppen, $C_5$-$C_8$-Cycloalkylgruppen und $C_6$-$C_{12}$-Arylgruppen ausgewählt sind;
- die Reste $R^2$, die substituiert oder unsubstituiert und gleich oder voneinander verschieden sind, aus der Gruppe bestehend aus Hydroxyl, $C_1$-$C_8$-Alkoxygruppen und $C_5$-$C_8$-Cycloalkoxygruppen ausgewählt sind.

**5.** Zusammensetzung nach einem der Ansprüche 1 bis 4, wobei es sich bei dem nichtaromatischen Vinylpolymer um ein Copolymer von mindestens einem ersten nichtaromatischen Vinylmonomer (als Monomer A bezeichnet) und mindestens einem zweiten funktionalisierten Monomer (als Monomer B bezeichnet), das die Funktion Z der Formel

≡Si-X trägt, handelt.

**6.** Zusammensetzung nach Anspruch 5, wobei das Monomer A eine oder mehrere, vorzugsweise eine einzige, radikalisch polymerisierbare Funktion(en) trägt.

**7.** Zusammensetzung nach Anspruch 6, wobei das Monomer A der folgenden Formel (II) entspricht:

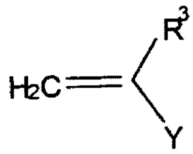

worin:

- der Rest $R^3$ aus der Gruppe bestehend aus Wasserstoff, $C_1$-$C_8$-Alkylgruppen und $C_5$-$C_8$-Cycloalkylgruppen ausgewählt ist;
- der Rest Y aus der Gruppe bestehend aus Halogenen und OH-, OR'-, SR'-, C≡N-, C(O)OH-, C(O)OR'-, C(O)N(R'R")-, C(O)R'- und OC(O)R'-Resten ausgewählt ist, wobei R' und R", die gleich oder verschieden sind, aus der Gruppe bestehend aus Alkylgruppen mit 1 bis 12 Kohlenstoffatomen und Aryl-, Aralkyl- oder Alkarylgruppen mit 6 bis 20 Kohlenstoffatomen ausgewählt sind.

**8.** Zusammensetzung nach einem der Ansprüche 5 bis 7, wobei das Monomer B aus der Gruppe bestehend aus Hydroxysilyl($C_1$-$C_4$)alkylacrylaten, Hydroxysilyl ($C_1$-$C_4$) alkylmethacrylaten, ($C_1$-$C_4$)Alkoxysilyl($C_1$-$C_4$)-alkylacrylaten, ($C_1$-$C_4$)Alkoxysilyl($C_1$-$C_4$)alkylmethacrylaten und Mischungen dieser Verbindungen ausgewählt ist.

**9.** Zusammensetzung nach einem der Ansprüche 5 bis 7, wobei das Comonomer B aus der Gruppe bestehend aus Styryl ($C_1$-$C_4$) alkylhydroxysilanen, Styryl($C_1$-$C_4$)-alkyl ($C_1$-$C_4$) alkoxysilanen und Mischungen dieser Verbindungen ausgewählt ist.

**10.** Zusammensetzung nach einem der Ansprüche 1 bis 9, wobei das nichtaromatische Vinylpolymer außerdem durch das Vorliegen mindestens eines mindestens bifunktionellen vernetzenden Comonomers (als Monomer C bezeichnet), das vorzugsweise durch eine Additionsreaktion polymerisierbar ist, vernetzt ist.

**11.** Zusammensetzung nach einem der Ansprüche 1 bis 10, wobei der mittlere Durchmesser der Nanopartikel zwischen 10 und 100 nm liegt.

**12.** Zusammensetzung nach Anspruch 10 oder 11, wobei es sich bei dem nichtaromatischen Vinylpolymer um ein Copolymer von Methylmethacrylat (Monomer A), Trimethoxysilylpropylmethacrylat (Monomer B) und Ethylenglykoldimethacrylat (Monomer C) handelt.

**13.** Verfahren zum Erhalt einer Kautschukzusammensetzung, bei dem man in mindestens ein Dienelastomer mindestens einen polymeren Füllstoff und ein Kupplungsmittel, das die Bindung zwischen dem polymeren Füllstoff und dem Elastomer gewährleistet, einarbeitet und das Ganze in einem oder mehreren Schritten thermomechanisch knetet, bis eine Höchsttemperatur zwischen 110°C und 190°C erreicht ist, **dadurch gekennzeichnet, dass** der polymere Füllstoff Nanopartikel aus ≡Si-X-funktionalisiertem nichtaromatischem Vinylpolymer, wobei X für eine Hydroxylgruppe oder eine hydrolysierbare Gruppe steht, umfasst.

**14.** Masterbatch auf Basis mindestens eines Dienelastomers und eines polymeren Füllstoffs, **dadurch gekennzeichnet, dass** der polymere Füllstoff Nanopartikel aus nichtaromatischem Vinylpolymer mit einer als Z bezeichneten Funktion der Formel =Si-X, wobei X für eine Hydroxylgruppe oder eine hydrolysierbare Gruppe steht, umfasst.

**15.** Verfahren zum Erhalt eines Masterbatch nach Anspruch 14, der mindestens ein Dienelastomer und einen polymeren Füllstoff umfasst, bei dem man:

- von einem Dienelastomerlatex und einem Latex des polymeren Füllstoffs ausgeht;
- die Latices innig mischt;
- die so erhaltene Mischung fällt;

- den so erhaltenen Niederschlag dann wäscht und trocknet,

**dadurch gekennzeichnet, dass** der polymere Füllstoff Nanopartikel aus nichtaromatischem Vinylpolymer mit einer als Z bezeichneten Funktion der Formel ≡Si-X, wobei X für eine Hydroxylgruppe oder eine hydrolysierbare Gruppe steht, umfasst.

**16.** Verwendung eines Masterbatch nach Anspruch 14 zur Herstellung einer Dienelastomerzusammensetzung.

**17.** Verwendung einer Kautschukzusammensetzung nach einem der Ansprüche 1 bis 12 zur Herstellung von Gegenständen oder Halbzeugen aus Kautschuk.

**18.** Gegenstand oder Halbzeug aus Kautschuk, umfassend eine Zusammensetzung nach einem der Ansprüche 1 bis 12.

**19.** Reifen, umfassend eine Kautschukzusammensetzung nach einem der Ansprüche 1 bis 12.

**20.** Halbzeug für einen Reifen, umfassend eine Kautschukzusammensetzung nach einem der Ansprüche 1 bis 12.

## Claims

**1.** Rubber composition based on at least one diene elastomer, a polymer filler, a coupling agent providing the bond between the polymer filler and the elastomer, **characterised in that** said polymer filler comprises nanoparticles of non-aromatic vinyl polymer bearing a function "Z" of formula ≡ Si - X, X representing a hydroxyl or hydrolysable group.

**2.** Composition according to Claim 1, X being a halogen.

**3.** Composition according to Claim 1, X corresponding to the formula OR in which R represents hydrogen or a straight-chain or branched monovalent hydrocarbon group.

**4.** Composition according to Claim 3, Z corresponding to one of the formulae:

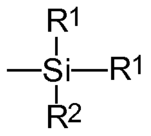 ; 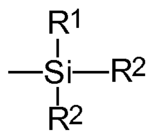 ; 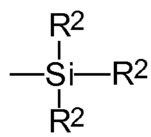 ,

in which:

- the radicals $R^1$, which may or may not be substituted, and which may be identical or different, are selected from the group consisting of $C_1$-$C_8$ alkyls, $C_5$-$C_8$ cycloalkyls and $C_6$-$C_{12}$ aryls;
- the radicals $R^2$, which may or may not be substituted, and which may be identical or different, are selected from the group consisting of hydroxyl, $C_1$-$C_8$ alkoxyls and $C_5$-$C_8$ cycloalkoxyls.

**5.** Composition according to any one of Claims 1 to 4, the non-aromatic vinyl polymer being a copolymer of at least one first, non-aromatic vinyl monomer (denoted "monomer A") and at least one second, functionalised, monomer (denoted "monomer B") bearing the function Z of formula = Si - X.

**6.** Composition according to Claim 5, the monomer A bearing one or more, preferably a single, function(s) polymerisable by free-radical polymerisation.

**7.** Composition according to Claim 6, the monomer A corresponding to Formula (II):

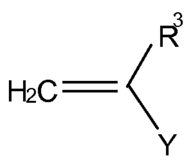

in which:

- the radical $R^3$ is selected from the group consisting of hydrogen, $C_1$-$C_8$ alkyls and $C_5$-$C_8$ cycloalkyls;
- the radical Y is selected from the group consisting of halogens, the radicals OH, OR', SR', C=N, C(O)OH, C(O)OR', C(O)N(R'R"), C(O)R' and OC(O)R' in which R' and R", which may be identical or different, are selected from the group consisting of alkyls comprising from 1 to 12 carbon atoms, and aryls, aralkyls or alkaryls comprising from 6 to 20 carbon atoms.

**8.** Composition according to any one of Claims 5 to 7, the monomer B being selected from the group consisting of hydroxysilyl-($C_1$-$C_4$) alkyl acrylates, hydroxysilyl-($C_1$-$C_4$) alkyl methacrylates, ($C_1$-$C_4$) alkoxysilyl- ($C_1$-$C_4$) alkyl acrylates, ($C_1$-$C_4$) alkoxysilyl-($C_1$-$C_4$) alkyl methacrylates and mixtures of these compounds.

**9.** Composition according to any one of Claims 5 to 7, the comonomer B being selected from the group consisting of styryl-($C_1$-$C_4$) alkyl-hydroxysilanes, styryl-($C_1$-$C_4$) alkyl-($C_1$-$C_4$) alkoxysilanes and mixtures of these compounds.

**10.** Composition according to any one of Claims 1 to 9, the non-aromatic vinyl polymer furthermore being crosslinked by the presence of at least one at least bifunctional cross-linking comonomer (denoted "monomer C"), which is preferably polymerisable by addition reaction.

**11.** Composition according to any one of Claims 1 to 10, the average diameter of the nanoparticles being between 10 and 100 nm.

**12.** Composition according to Claim 10 or 11, the non-aromatic vinyl polymer being a copolymer of methyl methacrylate (monomer A), trimethoxysilylpropyl methacrylate (monomer B) and ethylene glycol dimethacrylate (monomer C).

**13.** Process for obtaining a rubber composition in which there are incorporated in at least one diene elastomer at least one polymer filler, a coupling agent providing the bond between the polymer filler and the elastomer, and in that the entire mix is kneaded thermomechanically, in one or more steps, until a maximum temperature of between 110°C and 190°C is reached, **characterised in that** said polymer filler comprises nanoparticles of functionalised non-aromatic vinyl polymer ≡ Si - X, X representing a hydroxyl or hydrolysable group.

**14.** Masterbatch based on at least one diene elastomer and a polymer filler, **characterised in that** said polymer filler comprises nanoparticles of non-aromatic vinyl polymer bearing a function "Z" of formula ≡ Si - X, X representing a hydroxyl or hydrolysable group.

**15.** Process for obtaining a masterbatch according to Claim 14 comprising at least one diene elastomer and a polymer filler, comprising the following steps:

- starting from a latex of the diene elastomer and a latex of the polymer filler;
- mixing them thoroughly;
- precipitating the mix thus obtained;
- then washing and drying the precipitate thus obtained,

**characterised in that** said polymer filler comprises nanoparticles of non-aromatic vinyl polymer bearing a function Z of formula ≡ Si - X, X representing a hydroxyl or hydrolysable group.

**16.** Use of a masterbatch according to Claim 14 for the manufacture of a diene elastomer composition.

**17.** Use, for the manufacture of articles or semi-finished products made of rubber, of a rubber composition according to any one of Claims 1 to 12.

**18.** Article or semi-finished product made of rubber comprising a composition according to any one of Claims 1 to 12.

**19.** Tyre comprising a rubber composition according to any one of Claims 1 to 12.

**20.** Semi-finished product for tyres comprising a rubber composition in accordance with any one of Claims 1 to 12.

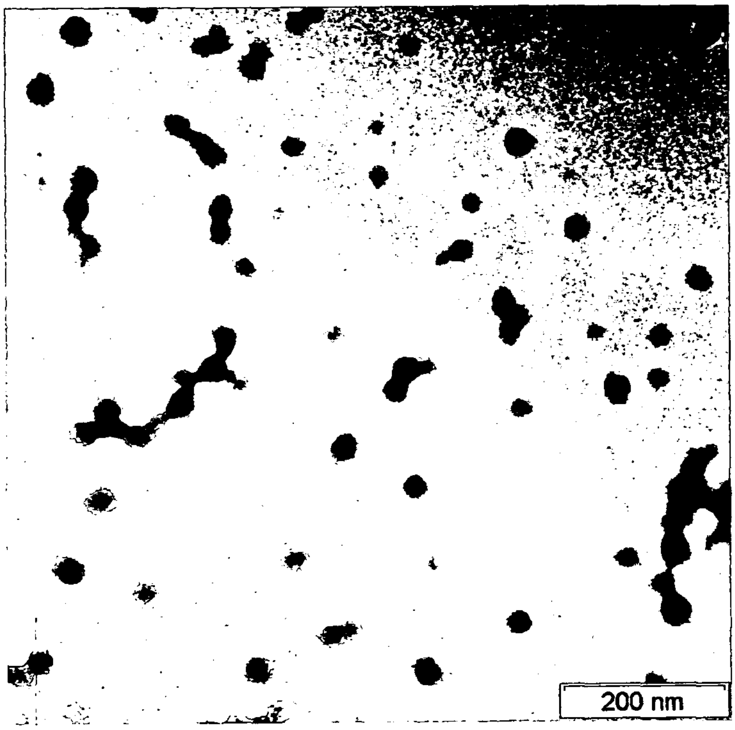


Fig. 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- US 20050228134 A
- EP 1298166 A
- US 3520838 A
- WO 03016387 A
- WO 03002648 A
- WO 03002649 A
- WO 02083782 A
- WO 0230939 A
- WO 0231041 A


### Littérature non-brevet citée dans la description


- **L. C. SAWYER ; DAVID GRUBB.** Polymer Microscopy. Chapman and Hall, 1987, 97-98
- *Macromolecules,* 2001, vol. 34, 5737
- *Macromolecules,* 2002, vol. 35, 6185
- *Polymer,* 2000, vol. 41, 481